# EUROPEAN PATENT APPLICATION

(11) **EP 4 825 334 A1**
(43) Date of publication of application: **21.10.2026**
(21) Application number: 24902844.0
(22) Date of filing: 11.12.2024
(51) Int. Cl.: A61C 7/08

(54) **SHELL-SHAPED DENTAL INSTRUMENT AND SHELL-SHAPED DENTAL INSTRUMENT ASSEMBLY**

(30) Priority: 11.12.2023 CN 202323384769 U; 11.12.2023 CN 202323381632 U; 11.12.2023 CN 202311694488; 08.05.2024 CN 202410566324
(71) Applicant: Wuxi Ea Medical Instruments Technologies Limited, Wuxi, Jiangsu 214174 (CN)
(72) Inventor: LIAO, Zhi, Wuxi, Jiangsu 214174 (CN); WANG, Meng, Wuxi, Jiangsu 214174 (CN); LI, Junsheng, Wuxi, Jiangsu 214174 (CN); ZHENG, Yikan, Wuxi, Jiangsu 214174 (CN); HOU, Junxiang, Wuxi, Jiangsu 214174 (CN)
(74) Representative: Winter, Brandl - Partnerschaft mbB
(86) International application number: PCT/CN2024/138432
(87) International publication number: WO 2025/124425

(57) **Abstract**

A shell-shaped dental instrument (100), comprising an appliance (10) having a cavity for accommodating teeth and a support unit (20). An occlusal surface (A1) of the appliance (10) comprises a support surface (A11) corresponding to an occlusal surface of a certain posterior tooth. The support surface (A11) comprises a first support surface (A111) located in the middle and a second support surface (A112) arranged around the first support surface (A111). A separation line (L) between the first support surface (A111) and the second support surface (A112) passes through a plurality of cusps (R). The plurality of cusps (R) correspond to a plurality of dental cusps of posterior teeth, respectively. The support unit (20) is located on the support surface (A11). A first peripheral line (L1) is formed in a junction region between the support unit (20) and the support surface (A11). At least part of the first peripheral line (L1) is located in the first support surface (A111).

## Description

The present application claims the priority of Chinese patent applications with filing dates of December 11, 2023, application numbers 202323384769.1, and application titles "Shell-shaped dental appliance and shell-shaped dental appliance assembly", with filing date of December 11, 2023, application number 202323381632.0, and application title "Dental orthodontic appliance and dental orthodontic appliance assembly", with filing date of December 11, 2023, application number 202311694488.8, and application title "Dental orthodontic appliance and dental orthodontic appliance assembly", and with filing date of May 8, 2024, application number 202410566324.5, and application title "Method for designing a digital bite pad, method for forming an appliance, appliance, appliance assembly, device, equipment, and medium", the entire contents of which are incorporated by reference into the present application.

### TECHNICAL FIELD

The present application is in the field of orthodontic treatment technology, and in particular to a shell-shaped dental appliance and a shell-shaped dental appliance assembly.

### BACKGROUND

Malocclusion refers to the deformity of teeth, jawbone, and craniofacial region caused by congenital or acquired factors during the growth and development of children, mainly manifested as dental crowding, misalignment of upper and lower jaws (e.g., buck teeth and underbite).

At present, for malocclusion, a shell-shaped dental appliance including a bite pad is generally used for treatment; the bite pad in the prior art has a problem of unstable occlusal pressure.

### SUMMARY

The purpose of the present application is to provide a shell-shaped dental appliance, a support unit on which can maintain a stable occlusal pressure.

One embodiment of the present invention provides a shell-shaped dental appliance, including an appliance having a cavity for accommodating teeth and a support unit, an occlusal surface of the appliance includes a support surface corresponding to an occlusal surface of a certain posterior tooth, the support surface includes a first support surface located in a middle portion and a second support surface surrounding the first support surface, a dividing line between the first support surface and the second support surface passes through a plurality of tips, the plurality of tips respectively correspond to a plurality of cusps of a posterior tooth, the support unit is located on the support surface, a junction region between the support unit and the support surface forms a first peripheral edge line, and at least a part of the first peripheral edge line is located within the first support surface.

Optionally, the entire first peripheral edge line is located within the first support surface.

Optionally, on a side close to a buccal surface or a lingual surface of the appliance, there is a gap between the first peripheral edge line and the dividing line.

Optionally, the first peripheral edge line is a closed annular structure, and the first peripheral edge line is spaced apart from the dividing line.

Optionally, the first peripheral edge line includes a first part located on the first support surface and a second part located on the second support surface, the second part is connected to the first part, and the second part is located on a buccal side or a lingual side of the first support surface.

Optionally, when the second part is located on the buccal side of the first support surface, the support unit is inclined toward a buccal surface of the appliance; when the second part is located on the lingual side of the first support surface, the support unit is inclined toward a lingual surface of the appliance.

Optionally, the second part is located on the buccal side of the first support surface, and there is a gap between a region of the first part close to a lingual surface of the appliance and the dividing line, or, the second part is located on the lingual side of the first support surface, and there is a gap between a region of the first part close to a buccal surface of the appliance and the dividing line.

Optionally, the second part is located on only one of the buccal side and the lingual side of the first support surface.

Optionally, the first peripheral edge line is a closed annular structure, and there is a gap or coincidence between the first part and a mesial end and a distal end of the dividing line.

Optionally, the first peripheral edge line is a closed annular structure, and the second part is also located on a mesial side and/or a distal side of the first support surface.

Optionally, the support unit is arranged vertically relative to an occlusal plane, or the support unit is arranged obliquely relative to the occlusal plane.

Optionally, the first peripheral edge line includes a plurality of curved segments, and adjacent curved segments transition smoothly.

Optionally, the first peripheral edge line includes at least one concave portion and at least one convex portion, and when the first peripheral edge line includes a plurality of concave portions or a plurality of convex portions, the concave portions and the convex portions are alternately connected one by one.

Optionally, an endpoint of the convex portion is adjacent to a corresponding tip.

Optionally, the shell-shaped dental appliance further includes a connecting unit located on the occlusal surface of the appliance, the connecting unit connects two support units, a junction region between the connecting unit and the occlusal surface forms a second peripheral edge line, and the second peripheral edge line is connected to the first peripheral edge line.

Optionally, the first peripheral edge line extends in a mesiodistal direction of the appliance and is connected to the second peripheral edge line, and the first peripheral edge line and the second peripheral edge line transition smoothly.

Optionally, the second peripheral edge line includes a lingual side line close to a lingual surface of the appliance and a buccal side line close to a buccal surface of the appliance, the lingual side line is concave toward the buccal side line, and the buccal side line is concave toward the lingual side line.

Optionally, the second peripheral edge line includes a first end connected to one of the first peripheral edge lines and a second end connected to another one of the first peripheral edge lines, in a direction from a buccal surface to a lingual surface of the appliance, the second peripheral edge line has a width, and the width first decreases and then increases when transitioning from the first end to the second end.

Optionally, in a direction from a buccal surface to a lingual surface of the appliance, the first peripheral edge line has a first width, the second peripheral edge line has a second width, a ratio of a maximum value of the first width to a minimum value of the second width ranges from 0.15 to 0.5, and the minimum value of the second width is not less than 0.5 mm, or the minimum value of the second width ranges from 1 mm to 4 mm.

Optionally, the shell-shaped dental appliance includes a plurality of support units and a plurality of connecting units alternately connected one by one.

Optionally, the support unit is formed surrounding a cavity, and the cavity communicates with the cavity.

One embodiment of the present invention provides a shell-shaped dental appliance assembly, including the shell-shaped dental appliance according to any one of the foregoing technical solutions and an opposing shell-shaped dental appliance, wherein one of the shell-shaped dental appliance and the opposing shell-shaped dental appliance is arranged corresponding to upper teeth, and the other is arranged corresponding to lower teeth.

Optionally, the opposing shell-shaped dental appliance includes an opposing appliance and a guide portion located on an occlusal surface of the opposing appliance, and when in an occlusal state, the guide portion and the support unit cooperate with each other in a mesiodistal direction to achieve a horizontal movement of the upper teeth or the lower teeth.

Optionally, the opposing shell-shaped dental appliance includes an opposing appliance having a cavity for accommodating teeth, and when upper and lower jaws are in an occlusal state, the support unit abuts against an occlusal surface of the opposing appliance, or the support unit abuts against an opposing support unit located on an occlusal surface of the opposing appliance.

One embodiment of the present invention provides a dental orthodontic appliance, including an appliance body and a bite pad located on an occlusal surface of the appliance body, the occlusal surface includes a first occlusal surface and a second occlusal surface that are connected, the first occlusal surface is arranged corresponding to a tooth occlusal surface, the second occlusal surface is arranged corresponding to an interdental space, and the bite pad located on the second occlusal surface exhibits an inward shrinking trend.

Optionally, a junction region between the bite pad and the occlusal surface forms an outer contour line, and in a direction from a buccal surface to a lingual surface of the appliance body, the outer contour line has a width, and the width shows a decreasing trend when transitioning from the first occlusal surface to the second occlusal surface.

Optionally, the outer contour line is formed by a plurality of curved segments, and adjacent curved segments transition smoothly.

Optionally, the outer contour line includes a first outer contour line corresponding to the first occlusal surface and a second outer contour line corresponding to the second occlusal surface, a width of the first outer contour line is a first width, a width of the second outer contour line is a second width, and a ratio of a maximum value of the first width to a minimum value of the second width ranges from 0.15 to 0.5.

Optionally, the minimum value of the second width is not less than 0.5 mm, or the minimum value of the second width ranges from 1 mm to 4 mm, and a minimum value of the first width is greater than or equal to a maximum value of the second width.

Optionally, the outer contour line includes a first outer contour line corresponding to the first occlusal surface, the first outer contour line corresponding to one tooth includes a first peak segment, a first trough segment, and a second peak segment that are connected, or the first outer contour line corresponding to one tooth includes a first trough segment, a first peak segment, and a second trough segment that are connected.

Optionally, the outer contour line includes a second outer contour line corresponding to the second occlusal surface, the second outer contour line is a trough segment, and the second outer contour line includes a first trough segment close to a lingual surface and a second trough segment close to a buccal surface.

Optionally, the bite pad is arranged corresponding to a plurality of posterior teeth, the first occlusal surface includes a first region located in a middle portion and a second region surrounding the first region, a dividing line between the first region and the second region passes through a plurality of tips, the plurality of tips respectively correspond to a plurality of cusps of a posterior tooth, a junction region between the bite pad and the first occlusal surface forms a first outer contour line, the first outer contour line includes an inner line located in the first region and an outer line located in the second region, and the outer line is connected to the inner line only in a mesiodistal direction of the appliance body.

Optionally, a junction region between the bite pad and the second occlusal surface forms a second outer contour line, the outer line connects the inner line and the second outer contour line, and the second outer contour line and the outer lines at both ends form a trough segment.

Optionally, the inner line includes a peak segment, endpoints of two trough segments located on a same side and adjacent to each other form a reference line, and a maximum distance between the peak segment and the reference line on the same side is not less than 0.5 mm, or the maximum distance ranges from 1 mm to 3 mm.

Optionally, the inner line includes a peak segment, and an endpoint of each peak segment is adjacent to a corresponding tip.

Optionally, the inner line includes a first inner line close to a buccal surface of the appliance body and a second inner line close to a lingual surface of the appliance body, there is a first gap between the first inner line and the corresponding dividing line, and there is a second gap between the second inner line and the corresponding dividing line.

Optionally, the bite pad includes an outer contour line formed at a junction region with the occlusal surface, an end surface away from the occlusal surface, and a side surface connecting a periphery of the end surface and the outer contour line, the end surface and the side surface are formed surrounding a cavity, the appliance body has a chamber for accommodating teeth, and the cavity communicates with the chamber.

Optionally, the side surface is formed by a plurality of curved surfaces, and adjacent curved surfaces transition smoothly.

Optionally, a plurality of points on the outer contour line enclose a reference plane, the side surface is perpendicular to the reference plane, or at least a part of the side surface forms an acute angle with the reference plane.

Optionally, a shape of the end surface matches a shape of an opposing occlusal surface.

Optionally, the dental orthodontic appliance further includes a filling portion located within the cavity.

Optionally, the bite pad includes a plurality of first occlusal surfaces and a plurality of second occlusal surfaces alternately connected one by one, and the bite pad at each second occlusal surface exhibits the inward shrinking trend.

One embodiment of the present invention provides a dental orthodontic appliance assembly, including the dental orthodontic appliance according to any one of the foregoing technical solutions and an opposing dental orthodontic appliance, one of the dental orthodontic appliance and the opposing dental orthodontic appliance is arranged corresponding to upper teeth, and the other is arranged corresponding to lower teeth, the opposing dental orthodontic appliance includes an opposing appliance body and a guide portion located on an occlusal surface of the opposing appliance body, and when in an occlusal state, the guide portion and the bite pad cooperate with each other in a mesiodistal direction to achieve a horizontal movement of the upper teeth or the lower teeth.

One embodiment of the present invention provides a method for designing a digital bite pad, including:
obtaining a target digital dentition; and
determining a reference line for the digital bite pad on a target end surface according to an outer contour of the target end surface of the target digital dentition, wherein the target end surface is a tooth end surface of the target digital dentition away from a gum, and the reference line is used to generate the digital bite pad.

Optionally, the reference line of the target end surface is determined according to at least one of: a shape of the outer contour of the target end surface and a tooth support capability of the target end surface.

Optionally, the design method includes:
offsetting the outer contour toward a direction approaching a reference line to form two inner contour lines respectively close to a buccal surface and a lingual surface, wherein the reference line extends in a mesiodistal direction and passes through a center of the target end surface or passes through a cusp of the target end surface; and
connecting the two inner contour lines to form a closed reference line.

Optionally, the design method includes:
forming a reference region located inside the outer contour on the target end surface, a periphery of the reference region forming a closed reference line.

Optionally, the design method includes:
obtaining a tooth support capability of the target end surface; and
determining the reference line based on the tooth support capability of at least a partial region of the target end surface.

Optionally, the design method includes:
determining a spacing between the reference line and a center line according to the tooth support capability, the center line is defined as a line passing through the center of the target end surface and extending in a mesiodistal direction, the spacing is a spacing in a buccolingual direction, and the spacing is proportional to the tooth support capability.

Optionally, the design method includes:
according to the tooth support capability, selecting a plurality of target points on the target end surface, wherein a vertical distance from a target point to a center line is proportional to the tooth support capability, and the center line is defined as a line passing through the center of the target end surface and extending in a mesiodistal direction; and
fitting the plurality of target points to form the reference line.

Optionally, a region of the reference line corresponding to an interdental space exhibits an inward shrinking trend.

Optionally, the design method includes:
selecting a plurality of first target points in a posterior tooth region of the target end surface, the first target points being adjacent to posterior tooth cusps; and/or
selecting a plurality of second target points in the posterior tooth region of the target end surface, the second target points being located in at least one of an interdental space and a fossa region; and
fitting the plurality of first target points and/or the second target points to form the reference line.

Optionally, the first target point located on a same side deviates more from a center line than the second target point, and the center line is defined as a line passing through a center of the target end surface and extending in a mesiodistal direction.

Optionally, the reference line includes two curves respectively close to a buccal surface and a lingual surface, the first target points are protruding points of one of the curves relative to the other curve, and the second target points are concave points of one of the curves relative to the other curve.

Optionally, the design method includes:
selecting at least one third target point in a posterior tooth region of the target end surface, the third target point being located in a fossa region, the third target point being used to form the reference line;
the third target point is located at a mesial end of the reference line and is concave in a distal direction, and/or the third target point is located at a distal end of the reference line and is concave in a mesial direction.

Optionally, the design method includes:
adjusting a preset bite pad based on the reference line and an occlusal relationship between the target digital dentition and an opposing digital dentition to generate the digital bite pad.

One embodiment of the present invention provides a method for forming an appliance, including:
obtaining a target digital dentition with a digital bite pad according to the method for designing the digital bite pad of any one of the foregoing technical solutions; and
generating an appliance with a bite pad.

One embodiment of the present invention provides an appliance, the appliance is obtained according to the method for forming the appliance as described above.

One embodiment of the present invention provides an appliance assembly, including the appliance with the bite pad as described above and an opposing appliance with a guide portion, the appliance is arranged corresponding to one of upper teeth or lower teeth, and the opposing appliance is arranged corresponding to the other, and when in an occlusal state, the guide portion and the bite pad cooperate with each other in a mesiodistal direction to achieve a horizontal movement of the upper teeth or the lower teeth.

One embodiment of the present invention provides an apparatus for designing a digital bite pad, including:
a first module configured to obtain a target digital dentition; and
a second module configured to determine a reference line for the digital bite pad on a target end surface according to an outer contour of the target end surface of the target digital dentition, wherein the target end surface is a tooth end surface of the target digital dentition away from a gum, and the reference line is used to generate the digital bite pad.

One embodiment of the present invention provides an electronic device, including a processor, a memory, and a communication bus, the processor and the memory communicate with each other via the communication bus;
the memory is configured to store an application program; and
the processor is configured to, when executing the application program stored in the memory, implement the steps of the method for designing the digital bite pad according to any one of the foregoing technical solutions.

One embodiment of the present invention provides a storage medium having an application program stored thereon, when the application program is executed, the steps of the method for designing the digital bite pad according to any one of the foregoing technical solutions are implemented.

Compared with the prior art, a beneficial effect of the present application is that: the support unit of an embodiment of the present application can maintain a stable occlusal pressure.

### BRIEF DESCRIPTION OF THE DRAWINGS

FIG. 1 is a schematic diagram of a shell-shaped dental appliance according to a first embodiment (a first specific example) of the present application;
FIG. 2 is a perspective view of the shell-shaped dental appliance corresponding to a single posterior tooth according to the first embodiment (the first specific example) of the present application;
FIG. 3 is a schematic diagram of the shell-shaped dental appliance corresponding to a single posterior tooth according to the first embodiment (the first specific example) of the present application;
FIG. 4 is another schematic diagram of the shell-shaped dental appliance corresponding to a single posterior tooth according to the first embodiment (the first specific example) of the present application;
FIG. 5 is another perspective view of the shell-shaped dental appliance corresponding to a single posterior tooth according to the first embodiment (the first specific example) of the present application;
FIG. 6 is a schematic diagram of a shell-shaped dental appliance according to a first embodiment (a second specific example) of the present application;
FIG. 7 is a schematic diagram of a partial region of the shell-shaped dental appliance according to the first embodiment (the second specific example) of the present application;
FIG. 8 is a schematic diagram of the shell-shaped dental appliance corresponding to a single posterior tooth according to the first embodiment (the second specific example) of the present application;
FIG. 9 is a schematic diagram of a shell-shaped dental appliance according to a second embodiment (a first specific example) of the present application;
FIG. 10 is a perspective view of a shell-shaped dental appliance corresponding to a single posterior tooth (a support unit being arranged vertically relative to an occlusal plane) according to the second embodiment (the first specific example) of the present application;
FIG. 11 is a schematic diagram of the support unit in FIG. 10 cooperating with an opposing occlusal surface;
FIG. 12 is a perspective view of the shell-shaped dental appliance corresponding to a single posterior tooth (a support unit being arranged obliquely relative to the occlusal plane) according to the second embodiment (the first specific example) of the present application;
FIG. 13 is a schematic diagram of the support unit in FIG. 12 cooperating with an opposing occlusal surface;
FIG. 14 and FIG. 15 are different schematic diagrams of the shell-shaped dental appliance corresponding to a single posterior tooth according to the second embodiment (the first specific example) of the present application;
FIG. 16 is a schematic diagram of a shell-shaped dental appliance corresponding to a single posterior tooth according to a second embodiment (a second specific example) of the present application;
FIG. 17 is a schematic diagram of a shell-shaped dental appliance according to a second embodiment (a third specific example) of the present application;
FIG. 18 is a schematic diagram of a partial region of the shell-shaped dental appliance according to the second embodiment (the third specific example) of the present application;
FIG. 19 is a schematic diagram of the shell-shaped dental appliance corresponding to a single posterior tooth according to the second embodiment (the third specific example) of the present application;
FIG. 20 and FIG. 21 are schematic diagrams of a shell-shaped dental appliance assembly according to an embodiment of the present application;
FIG. 22 is a perspective view of a dental orthodontic appliance according to an embodiment of the present application;
FIG. 23 is other schematic diagrams of the dental orthodontic appliance according to an embodiment of the present application;
FIG. 24 is a partial schematic diagram of the dental orthodontic appliance according to an embodiment of the present application;
FIG. 25 is another partial schematic diagram of the dental orthodontic appliance according to an embodiment of the present application;
FIG. 26 is a perspective view of a bite pad located in a first region according to an embodiment of the present application;
FIG. 27 is a schematic diagram of a bite pad located on a first occlusal surface according to an embodiment of the present application;
FIG. 28 is a schematic diagram of a dental orthodontic appliance assembly according to an embodiment of the present application.
FIG. 29 is a step diagram of a method for designing a digital bite pad according to an embodiment of the present application;
FIG. 30 is a top view of a target digital dentition with a generated reference line according to an embodiment of the present application;
FIG. 31 is a schematic diagram of a target digital dentition and an opposing digital dentition in a specific occlusal state (cooperating with a digital bite pad) according to an embodiment of the present application;
FIG. 32 to FIG. 35 are partial step diagrams of the method for designing a digital bite pad according to an embodiment of the present application;
FIG. 36 is a schematic diagram of a target digital dentition with a generated reference line according to an embodiment of the present application;
FIG. 37 is a schematic diagram of a posterior tooth carrying a digital dentition according to an embodiment of the present application;
FIG. 38 is a schematic diagram of a posterior tooth having a reference line according to an embodiment of the present application;
FIG. 39 is a schematic diagram of a digital dentition according to an embodiment of the present application;
FIG. 40 is a step diagram of a method for forming an appliance according to an embodiment of the present application;
FIG. 41 is a schematic diagram of an appliance with a bite pad according to an embodiment of the present application;
FIG. 42 is a schematic diagram of an appliance assembly according to an embodiment of the present application;
FIG. 43 is a schematic diagram of an apparatus for designing a digital bite pad according to an embodiment of the present application.

### DETAILED DESCRIPTION OF EMBODIMENTS

The present application will be described in detail below with reference to the specific embodiments shown in the accompanying drawings. However, these embodiments do not limit the present application, and any changes in structure, method, or function made by a person of ordinary skill in the art based on these embodiments are included within the protection scope of the present application.

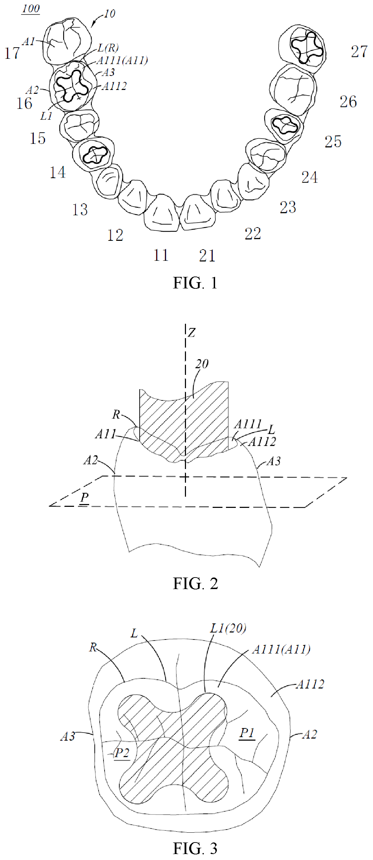

With reference to FIG. 1 and FIG. 2, a shell-shaped dental appliance 100 according to an embodiment of the present application is illustrated.

The shell-shaped dental appliance 100 includes an appliance 10 having a cavity S for accommodating teeth and a support unit 20. Each support unit 20 is arranged corresponding to a posterior tooth in a posterior tooth region.

An occlusal surface A1 of the appliance 10 includes a support surface A11 corresponding to an occlusal surface of a certain posterior tooth, that is, each support surface A11 is arranged corresponding to the occlusal surface of a posterior tooth. The occlusal surface of a posterior tooth refers to a lower end surface of each upper posterior tooth or an upper end surface of each lower posterior tooth.

The support surface A11 includes a first support surface A111 located in a middle portion and a second support surface A112 surrounding the first support surface A111, and a dividing line L between the first support surface A111 and the second support surface A112 passes through a plurality of tips R, the plurality of tips R respectively correspond to a plurality of cusps of a posterior tooth.

Here, the first support surface A111 is a central region of the support surface A11, the first support surface A111 corresponds to a central concave portion in FIG. 2, the second support surface A112 is a peripheral region of the support surface A11, and the second support surface A112 corresponds to a peripheral inclined portion in FIG. 2 (i.e., a part of the second support surface A112 connects a buccal surface A2 and a lingual surface A3 of the appliance 10).

The support unit 20 of the present embodiment is located on the support surface A11, a junction region between the support unit 20 and the support surface A11 forms a first peripheral edge line L1, and at least a part of the first peripheral edge line L1 is located within the first support surface A111, that is, at least a part of the first peripheral edge line L1 does not extend beyond the dividing line L.

In the first embodiment, with reference to FIG. 1 to FIG.4, the entire first peripheral edge line L1 is located within the first support surface A111.

If the support unit 20 is arranged corresponding to the first support surface A111, the entire first support surface A111 can provide a stable supporting function, which can improve the stability of the support unit 20 under occlusal pressure. If the support unit 20 is arranged corresponding to the second support surface A112, the inclined surface bears the occlusal pressure, and the supporting function of the inclined surface is unstable and prone to side-slip collapse.

The entire support unit 20 of the present embodiment is arranged corresponding to the first support surface A111, i.e., the entire support unit 20 is arranged corresponding to the central region of the support surface A11. The advantage of such an arrangement is that: the entire support unit 20 is supported by the first support surface A111, and the first support surface A111 can provide a stable supporting function for the support unit 20, thereby maintaining a stable occlusal pressure, ensuring that the occlusal pressure is borne by the corresponding posterior tooth, and preventing the support unit 20 from side-slip collapse.

Specifically, on a side close to the buccal surface A2 or the lingual surface A3 of the appliance 10, there is a gap between the first peripheral edge line L1 and the dividing line L.

On the side close to the buccal surface A2 of the appliance 10, there is a first gap P1 between the first peripheral edge line L1 and the dividing line L, and on the side close to the lingual surface A3 of the appliance 10, there is a second gap P2 between the first peripheral edge line L1 and the dividing line L. In this way, it can be ensured that the corresponding support unit 20 is located on the first support surface A111.

Optionally, the support unit 20 is formed surrounding a cavity S1, and the cavity S1 communicates with the cavity S.

The appliance 10 may be a clear aligner made of a polymer material, and the cavity S has a geometry for repositioning a dentition from a current arrangement to a next arrangement, the support unit 20 may be integrally formed with the appliance 10, and the cavity S1 formed by the support unit 20 and the cavity S formed by the appliance 10 communicate with each other.

The support unit 20 forming the cavity S1 is a hollow structure, and the hollow support unit 20 is more prone to collapse, in conjunction with the foregoing description, since the support unit 20 of the present embodiment is entirely supported by the first support surface A111 located in the central region of the support surface A11, the hollow support unit 20 can be prevented from side-slip collapse.

The shell-shaped dental appliance 100 may further include a filling portion located within the cavity S1, and the filling portion can enhance the strength of the support unit 20 and further prevent the support unit 20 from collapsing.

Optionally, the support unit 20 includes the first peripheral edge line L1 formed at the junction region with the support surface A11, an end surface 21 away from the support surface A11, and a side surface 22 connecting the end surface 21 and the first peripheral edge line L1, and the end surface 21 and the side surface 22 form the cavity S1.

Optionally, the support unit 20 is arranged vertically relative to an occlusal plane P, or the support unit 20 is arranged obliquely relative to the occlusal plane P. The occlusal plane P is substantially a plane parallel to a horizontal plane.

With reference to FIG. 2, "the support unit 20 is arranged vertically relative to the occlusal plane P" means that a central axis Z of the support unit 20 is substantially perpendicular to the occlusal plane P, i.e., the support unit 20 extends substantially along a vertical direction, it is defined that the support unit 20 has a first cross-section in a direction parallel to the occlusal plane P, when the first cross-section remains constant along the vertical direction, the support unit 20 can be regarded as a straight cylindrical structure, the side surface 22 of the support unit 20 is substantially perpendicular to the occlusal plane P, and a projection of the first peripheral edge line L1 onto the occlusal plane P coincides with a projection of a periphery of the end surface 21 onto the occlusal plane P.

Alternatively, the side surface 22 of the support unit 20 is perpendicular to a plane enclosed by a plurality of points on the first peripheral edge line L1.

Since the first peripheral edge line L1 is located on the support surface A11 of the appliance 10, the plurality of points forming the first peripheral edge line L1 are not substantially on the same plane, therefore, the "plane enclosed by the plurality of points on the first peripheral edge line L1" is used here to represent the plane enclosed by the first peripheral edge line L1, and a plane passing through as many points on the first peripheral edge line L1 as possible is taken as the standard.

That is, the support unit 20 at this time is substantially arranged perpendicular to the support surface A11 of the appliance 10, and a contour line of an orthographic projection of the support unit 20 onto the support surface A11 is the first peripheral edge line L1, but the present application is not limited thereto.

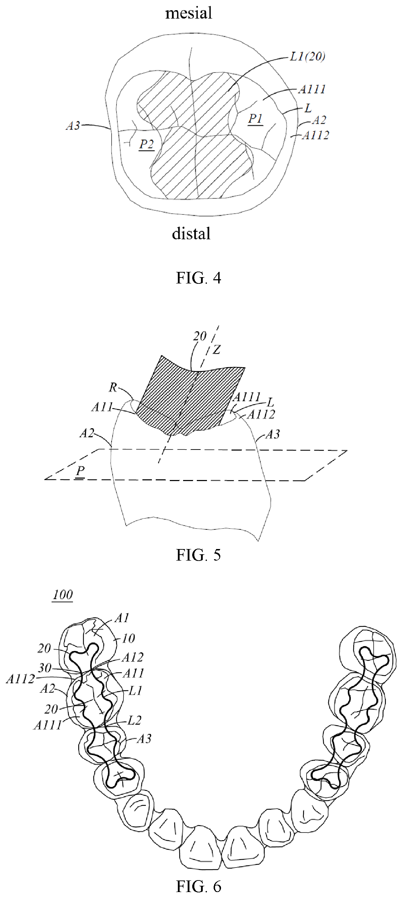

With reference to FIG. 5, "the support unit 20 is arranged obliquely relative to the occlusal plane P" means that an acute angle is formed between the central axis Z of the support unit 20 and the occlusal plane P, i.e., the support unit 20 extends obliquely relative to the vertical direction. The support unit 20 arranged obliquely can reduce the difficulty of demolding and can also increase the occlusal contact area with an opposing jaw.

Optionally, a shape of the end surface 21 of the support unit 20 matches a shape of an opposing occlusal surface.

Here, the "opposing occlusal surface" may be an occlusal surface of an opposing tooth, an occlusal surface of an opposing appliance, or an occlusal surface of an opposing support unit, "the shape of the end surface 21 of the support unit 20 matches the shape of the opposing occlusal surface" means that when the upper and lower jaws occlude, the end surface 21 of the support unit 20 and the opposing occlusal surface can fit together, which can improve the accuracy of the occlusal position and the stability of occlusion, thereby improving the jaw position correction effect.

The present embodiment takes the end surface 21 of the support unit 20 as an irregular shape as an example, i.e., the end surface 21 at this time is a non-planar structure.

Optionally, the first peripheral edge line L1 includes a plurality of curved segments, and adjacent curved segments transition smoothly.

Correspondingly, the side surface 22 is formed by a plurality of curved surfaces, and adjacent curved surfaces transition smoothly.

The side surface 22 does not include a plane, or rather, there is no right-angle, acute-angle, or obtuse-angle transition on the side surface 22, this allows the occlusal pressure received by the entire support unit 20 to be uniformly distributed, avoiding stress concentration points on the support unit 20, thereby enhancing the strength of the support unit 20, moreover, when the shell-shaped dental appliance 100 with the support unit 20 is obtained by demolding, the rounded transitions can effectively reduce the difficulty of demolding.

Optionally, the first peripheral edge line L1 includes at least one concave portion and at least one convex portion, and when the first peripheral edge line L1 includes a plurality of concave portions or a plurality of convex portions, the concave portions and the convex portions are alternately connected one by one, that is, the first peripheral edge line L1 at this time is substantially a wavy structure.

The structure between two adjacent convex portions is the concave portion, similarly, the structure between two adjacent concave portions is the convex portion, and the convex portion can further enhance the strength of the corresponding support unit 20.

An endpoint M of the convex portion is adjacent to the corresponding tip R, wherein the "endpoint M of the convex portion" refers to the highest point of the convex portion, i.e., the peak point of the convex portion.

That is, the endpoint M of the convex portion and the tip R match each other in position, for example, for a certain posterior tooth, the endpoint M of the convex portion is closer to the center of the posterior tooth than the corresponding tip R, and the spacing between each endpoint M of the convex portion and the tip R remains substantially constant, at this time, for posterior teeth of different patients or different posterior teeth of the same patient, the convex portion is customized, so that the support unit 20 matches the corresponding posterior tooth more closely.

Optionally, the first peripheral edge line L1 is a symmetrical structure, and the symmetrical structure can enhance the uniformity of force on the corresponding support unit 20.

Next, two specific examples of the shell-shaped dental appliance 100 of the first embodiment are introduced.

In the first specific example, with reference to FIG. 1 to FIG. 5, the first peripheral edge line L1 formed at the junction region between the support unit 20 and the support surface A11 is a closed annular structure, and the first peripheral edge line L1 is spaced apart from the dividing line L.

The support unit 20 is an independent structure not connected to other structures, and each support unit 20 is independently arranged corresponding to one posterior tooth, at this time, the support unit 20 can be individually formed according to requirements such as the specific size of the posterior tooth and the occlusal pressure to be borne, for example, support units 20 of different shapes and sizes can be individually configured for different posterior teeth.

With reference to FIG. 1, the closed annular structure formed by the first peripheral edge line L1 is substantially in the shape of a plum blossom.

The closed annular structure formed by the first peripheral edge line L1 at posterior tooth No. 16 shown in FIG. 1 is a centrosymmetric structure, and the symmetric structure includes four convex portions and four concave portions, and the four convex portions and the four concave portions are alternately connected one by one, and the four convex portions have the same shape.

The closed annular structure formed by the first peripheral edge line L1 at posterior tooth No. 14 shown in FIG. 1 is an axisymmetric structure, and the symmetric structure includes four convex portions and four concave portions, and the four convex portions and the four concave portions are alternately connected one by one, and two convex portions located on the same straight line have the same shape, and since the size of this posterior tooth in the mesiodistal direction is relatively small, the size of the convex portion of the first peripheral edge line L1 in the mesiodistal direction is also relatively small.

In the specific example, with reference to FIG. 3, the first peripheral edge line L1 is a closed annular structure, and in each direction, there is a gap between the first peripheral edge line L1 and the dividing line L, that is, the first peripheral edge line L1 at this time is located in the absolute central region of the first support surface A111.

Specifically, on the side close to the buccal surface A2 of the appliance 10, there is the first gap P1 between the first peripheral edge line L1 and the dividing line L, and the first peripheral edge line L1 includes a convex portion close to the buccal surface A2, and in a direction from the buccal surface A2 to the lingual surface A3 of the appliance 10, the first gap P1 between the convex portion and the dividing line L is not less than 1 mm.

On the side close to the lingual surface A3 of the appliance 10, there is the second gap P2 between the first peripheral edge line L1 and the dividing line L, and the first peripheral edge line L1 includes a convex portion close to the lingual surface A3, and in the direction from the buccal surface A2 to the lingual surface A3 of the appliance 10, the second gap P2 between the convex portion and the dividing line L is not less than 1 mm.

With reference to FIG. 4, compared to the first peripheral edge line L1 in FIG. 3, the first peripheral edge line L1 in FIG. 4 extends in the mesial direction and the distal direction and contacts the dividing line L, at this time, the first peripheral edge line L1 still does not extend beyond the dividing line L, the mesial end and the distal end of the first peripheral edge line L1 coincide with the dividing line L, and the first peripheral edge line L1 at this time is still a closed annular structure.

The first peripheral edge line L1 in FIG. 4 can still be regarded as being located in the central region of the first support surface A111, and since the first peripheral edge line L1 at this time is relatively long, the corresponding support unit 20 is also relatively large in size, and the support unit 20 can provide a larger area to maintain a greater occlusal pressure.

Specifically, on the side close to the buccal surface A2 of the appliance 10, there is the first gap P1 between the first peripheral edge line L1 and the dividing line L, and the first peripheral edge line L1 includes the convex portion close to the buccal surface A2, and in the direction from the buccal surface A2 to the lingual surface A3 of the appliance 10, the first gap P1 between the convex portion and the dividing line L is not less than 1 mm.

On the side close to the lingual surface A3 of the appliance 10, there is the second gap P2 between the first peripheral edge line L1 and the dividing line L, and the first peripheral edge line L1 includes the convex portion close to the lingual surface A3, and in the direction from the buccal surface A2 to the lingual surface A3 of the appliance 10, the second gap P2 between the convex portion and the dividing line L is not less than 1 mm.

With reference to FIG. 6 to FIG. 8, which are schematic diagrams of a shell-shaped dental appliance 100 according to the second specific example, and for ease of description, the same or similar structures are denoted by the same or similar reference numerals.

In the specific example, the shell-shaped dental appliance 100 further includes a connecting unit 30 located on the occlusal surface A1 of the appliance 10, and the connecting unit 30 connects two support units 20, and a junction region between the connecting unit 30 and the occlusal surface A1 forms a second peripheral edge line L2, and the second peripheral edge line L2 is connected to the first peripheral edge line L1.

The support unit 20 is connected to other structures, and the first peripheral edge line L1 formed at the junction region between one support unit 20 and the support surface A11 is not a closed structure, and a free end of the first peripheral edge line L1 is connected to the second peripheral edge line L2, corresponding to the support unit 20 being connected to the connecting unit 30 to cover a plurality of posterior teeth, and at this time, the plurality of support units 20 can provide a larger area to maintain a greater occlusal pressure.

Specifically, on the side close to the buccal surface A2 of the appliance 10, there is the first gap P1 between the first peripheral edge line L1 and the dividing line L, and the first peripheral edge line L1 includes the convex portion close to the buccal surface A2, and in the direction from the buccal surface A2 to the lingual surface A3 of the appliance 10, the first gap P1 between the convex portion and the dividing line L is not less than 1 mm.

On the side close to the lingual surface A3 of the appliance 10, there is the second gap P2 between the first peripheral edge line L1 and the dividing line L, and the first peripheral edge line L1 includes the convex portion close to the lingual surface A3, and in the direction from the buccal surface A2 to the lingual surface A3 of the appliance 10, the second gap P2 between the convex portion and the dividing line L is not less than 1 mm.

The occlusal surface A1 includes a connecting surface A12 connecting two adjacent support surfaces A11, and the connecting surface A12 actually connects a mesial end of one second support surface A112 and a distal end of another second support surface A112, and the connecting surface A12 is arranged corresponding to an interdental space, the "interdental space" refers to a region between two adjacent teeth.

It can be understood that since the support unit 20 is connected to the first support surface A111, the connecting unit 30 connecting two adjacent support units 20 is actually connected to the connecting surface A12 and the second support surface A112, that is, the connecting unit 30 extends from the connecting surface A12 to the second support surfaces A112 on both sides to connect the two support units 20 on both sides.

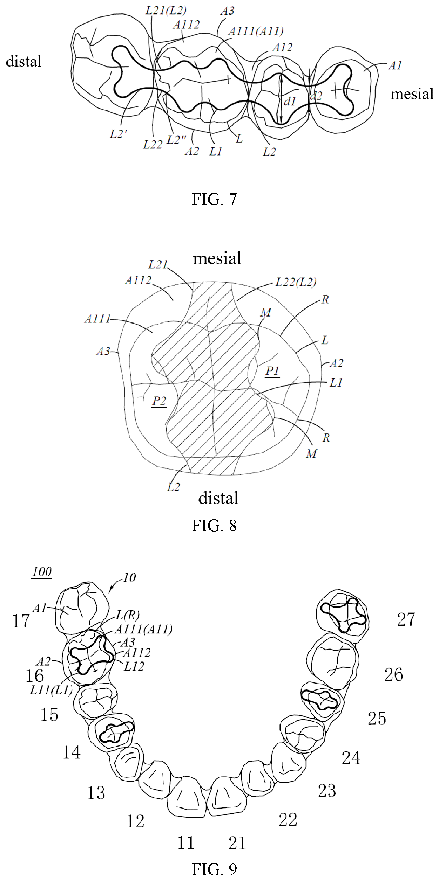

With reference to FIG. 7 and FIG. 8, the first peripheral edge line L1 extends to the dividing line L and is connected to the second peripheral edge line L2, and the first peripheral edge line L1 and the second peripheral edge line L2 transition smoothly.

The second peripheral edge line L2 is connected to the mesial end or the distal end of the first peripheral edge line L1, and the second peripheral edge line L2 extends to cover the connecting surface A12 and the second support surfaces A112 located on both sides of the connecting surface A12, and the smooth transition between the first peripheral edge line L1 and the second peripheral edge line L2 can further improve the strength of the support unit 20 and the connecting unit 30 and the smoothness of the transition therebetween.

In the specific example, the first peripheral edge line L1 arranged corresponding to a certain posterior tooth can also be regarded as a symmetrical structure, and the first peripheral edge line L1 includes convex portions and concave portions to improve the strength of the support unit 20.

The second peripheral edge line L2 includes a lingual side line L21 close to the lingual surface A3 of the appliance 10 and a buccal side line L22 close to the buccal surface A2 of the appliance 10, and the lingual side line L21 is concave toward the buccal side line L22, and the buccal side line L22 is concave toward the lingual side line L21.

In other words, the second peripheral edge line L2 includes a first end L2' connected to one of the first peripheral edge lines L1 and a second end L2" connected to another one of the first peripheral edge lines L1, and in a direction from the buccal surface A2 to the lingual surface A3 of the appliance 10, the second peripheral edge line L2 has a width, and the width first decreases and then increases when transitioning from the first end L2' to the second end L2".

It can be seen that the connecting unit 30 corresponding to the second peripheral edge line L2 at the time generally exhibits an inward shrinking trend.

In the direction from the buccal surface to the lingual surface of the posterior tooth, the width of the occlusal surface of the posterior tooth is greater than the width of the interdental space, when the support unit 20 and the connecting unit 30 receive occlusal pressure applied by the opposing jaw, the occlusal surface of the posterior tooth provides support for the support unit 20 located on the first support surface A111, while the interdental space provides support for the connecting unit 30 located at the interdental space, that is, the relatively wide occlusal surface of the posterior tooth supports the relatively wide support unit 20, and the relatively narrow interdental space supports the relatively narrow connecting unit 30, at the time, there is a tooth (the occlusal surface of the posterior tooth or the interdental space) providing support beneath each of the support unit 20 and the connecting unit 30, preventing the support unit 20 and the connecting unit 30 from deforming or collapsing due to lack of tooth support thereunder.

In the direction from the buccal surface A2 to the lingual surface A3 of the appliance 10, the first peripheral edge line L1 has a first width d1, and the second peripheral edge line L2 has a second width d2.

Both the first width d1 and the second width d2 are varying widths, the first width d1 is relatively large to correspond to the relatively wide support unit 20 located on the first support surface A111, and the second width d2 is relatively small to correspond to the relatively narrow connecting unit 30 located at the interdental space, through reasonable design of the first width d1 and the second width d2, it can be ensured that there is a tooth providing support beneath each of the support unit 20 and the connecting unit 30, and the first width d1 and the second width d2 can be customized according to the posterior teeth of different patients or different posterior teeth of the same patient.

Specifically, a ratio of a maximum value of the first width d1 to a minimum value of the second width d2 ranges from 0.15 to 0.5, and the minimum value of the second width d2 is not less than 0.5 mm.

Since the width of the region in the interdental space that can provide support for the connecting unit 30 is relatively narrow, a relatively narrow second width d2 is required to prevent the connecting unit 30 from lacking tooth support thereunder, when the second width d2 is too narrow, the process difficulty increases, and when the second width d2 is directly zero (i.e., a plurality of support units 20 are spaced apart), the demolding difficulty is greatly increased.

While considering the process difficulty, the demolding difficulty, and making the second width d2 as narrow as possible, the specific example controls the minimum value of the second width d2 to be not less than 0.5 mm, and preferably, the minimum value of the second width d2 ranges from 1 mm to 4 mm.

In addition, a minimum value of the first width d1 is greater than or equal to a maximum value of the second width d2, further ensuring that the first width d1 is relatively large and the second width d2 is relatively small.

In the specific example, the shell-shaped dental appliance 100 includes a plurality of support units 20 and a plurality of connecting units 30 alternately connected one by one, that is, the occlusal surface of the appliance 10 is provided with one support unit 20, one connecting unit 30, one support unit 20, one connecting unit 30, and so on, connected in sequence.

Each connecting unit 30 exhibits an inward shrinking trend, and the degree of inward shrinking of the connecting unit 30 at each second support surface A12 is related to the width of the interdental space corresponding to the second support surface A12.

It can be seen that for posterior teeth of different patients or different posterior teeth of the same patient, the connecting unit 30 at the second support surface A12 is also customized.

In summary, various parameters of the specific example can be customized and configured according to a single case, and the parameters include the first width d1 of the support unit 20, the second width d2 of the connecting unit 30, the relationship between the endpoint M of each convex portion and the tip R, the peak segments and trough segments in the first peripheral edge line L1 and the second peripheral edge line L2, the connection relationship between the first peripheral edge line L1 and the second peripheral edge line L2, the gap between the first peripheral edge line L1 and the dividing line L, etc. In this way, the support unit 20 and the connecting unit 30 can match the posterior tooth more closely, and there is a tooth providing support beneath each part of the support unit 20 and the connecting unit 30.

In summary, the entire support unit 20 of the first embodiment is arranged corresponding to the first support surface A111, i.e., the entire support unit 20 is arranged corresponding to the central region of the support surface A11, the advantage of such an arrangement is that: the entire support unit 20 is supported by the first support surface A111, and the first support surface A111 can provide a stable supporting function for the support unit 20, thereby maintaining a stable occlusal pressure, ensuring that the occlusal pressure is borne by the corresponding posterior tooth, and preventing the support unit 20 from side-slip collapse.

In the second embodiment, with reference to FIG. 9 to FIG. 11, the first peripheral edge line L1 includes a first part L11 located on the first support surface A111 and a second part L12 located on the second support surface A112, and the second part L12 is connected to the first part L11, and the second part L12 is located on a buccal side or a lingual side of the first support surface A111, that is, a part of the first peripheral edge line L1 of the second embodiment is located within the first support surface A111, and another part is located outside the first support surface A111.

"The first part L11 located on the first support surface A111" means that the first part L11 does not extend beyond the dividing line L, and the first part L11 is inside the dividing line L.

"The second part L12 located on the second support surface A112" means that the second part L12 extends beyond the dividing line L, and the second part L12 is outside the dividing line L.

"The second part L12 is connected to the first part L11" means that the second part L12 and the first part L11 are located on the same support unit 20, and the second part L12 and the first part L11 are a continuous structure.

"The second part L12 is located on the buccal side or the lingual side of the first support surface A111" means that the second part L12 can be regarded as an extension of the first part L11 toward the buccal surface A2 and the lingual surface A3 of the appliance 10, whether the second part L12 is located on the buccal side or the lingual side of the first support surface A111 can be determined according to the positional relationship between the upper and lower jaws, i.e., the extension direction of the second part L12 can be determined according to the direction of malocclusion.

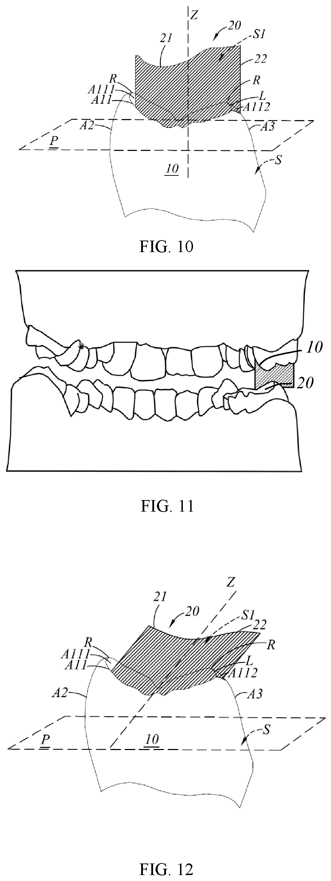

For example, when the occlusal surface where the opposing jaw cooperates with the support unit 20 is mainly close to the buccal side of the first support surface A111 (i.e., the direction of malocclusion is on the buccal side), the second part L12 is located on the buccal side of the first support surface A111 to increase the contact area between the support unit 20 corresponding to the second part L12 and the opposing occlusal surface; when the occlusal surface where the opposing jaw cooperates with the support unit 20 is mainly close to the lingual side of the first support surface A111 (i.e., the direction of malocclusion is on the lingual side), the second part L12 is located on the lingual side of the first support surface A111 to increase the contact area between the support unit 20 corresponding to the second part L12 and the opposing occlusal surface, and FIG. 11 takes the case where the direction of malocclusion is on the lingual side as an example, and the second part L12 is located on the lingual side of the first support surface A111.

The "opposing occlusal surface" may be an occlusal surface of an opposing tooth, an occlusal surface of an opposing appliance, or an occlusal surface of an opposing support unit.

In the present embodiment, a part of the support unit 20 (the part corresponding to the first part L11) is arranged corresponding to the first support surface A111, and another part (the part corresponding to the second part L12) is arranged corresponding to the second support surface A112, and the advantage of such an arrangement is that: the first support surface A111 can provide a stable supporting function for the support unit 20, thereby maintaining a stable occlusal pressure, and the support unit 20 extending to the second support surface A112 can increase the contact area with the opposing occlusal surface, thereby achieving a stable occlusion.

Optionally, the second part L12 is located on only one of the buccal side and the lingual side of the first support surface A111, that is, the second part L12 is located only on the buccal side of the first support surface A111 but not on the lingual side of the first support surface A111, or the second part L12 is located only on the lingual side of the first support surface A111 but not on the buccal side of the first support surface A111, that is, in the buccolingual direction of the appliance 10, a part of the first peripheral edge line L1 is located on the first support surface A111, and another part is located on the second support surface A112.

Optionally, the second part L12 is located on the buccal side of the first support surface A111, and there is a gap between a region of the first part L11 close to the lingual surface A3 of the appliance 10 and the dividing line L. Alternatively, the second part L12 is located on the lingual side of the first support surface A111, and there is a gap between a region of the first part L11 close to the buccal surface of the appliance 10 and the dividing line L. In the buccolingual direction of the appliance 10, a part of the first peripheral edge line L1 is located on the first support surface A111, and another part is located on the second support surface A112.

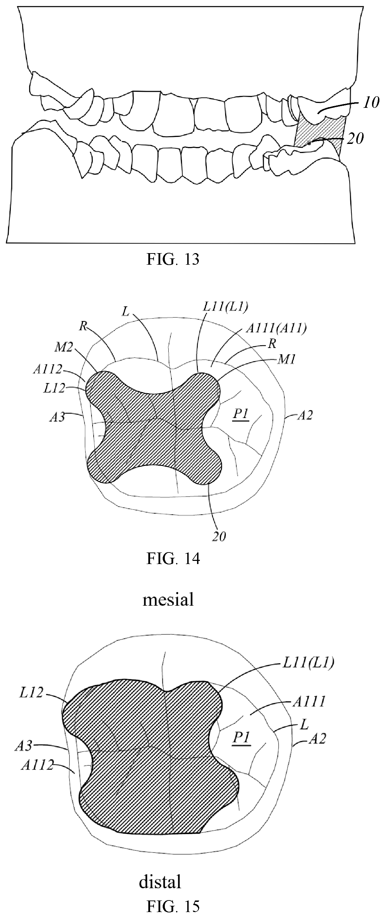

Optionally, with reference to FIG. 10 and FIG. 11, the support unit 20 is arranged vertically relative to the occlusal plane P, or, with reference to FIG. 12 and FIG. 13, the support unit 20 is arranged obliquely relative to the occlusal plane P, The occlusal plane P is substantially a plane parallel to a horizontal plane.

The support unit 20 includes the first peripheral edge line L1 formed at the junction region with the support surface A11, the end surface 21 away from the support surface A11, and the side surface 22 connecting the end surface 21 and the first peripheral edge line L1, and the end surface 21 and the side surface 22 form the cavity S1.

With reference to FIG. 10, "the support unit 20 is arranged vertically relative to the occlusal plane P" means that the central axis Z of the support unit 20 is substantially perpendicular to the occlusal plane P, i.e., the support unit 20 extends substantially along the vertical direction, it is defined that the support unit 20 has the first cross-section in the direction parallel to the occlusal plane P, when the first cross-section remains constant along the vertical direction, the support unit 20 can be regarded as the straight cylindrical structure, the side surface 22 of the support unit 20 is substantially perpendicular to the occlusal plane P, and the projection of the first peripheral edge line L1 onto the occlusal plane P coincides with the projection of the periphery of the end surface 21 onto the occlusal plane P.

When the support unit 20 is arranged vertically relative to the occlusal plane P, the contact area between the support unit 20 and the opposing occlusal surface is increased by the support unit 20 corresponding to the second part L12.

With reference to FIG. 12, "the support unit 20 is arranged obliquely relative to the occlusal plane P" means that the acute angle is formed between the central axis Z of the support unit 20 and the occlusal plane P, i.e., the support unit 20 extends obliquely relative to the vertical direction.

When the second part L12 is located on the buccal side of the first support surface A111, the support unit 20 is inclined toward the buccal surface A2 of the appliance 10. At the time, on the basis of increasing the contact area between the support unit 20 and the opposing occlusal surface by the support unit 20 corresponding to the second part L12, the contact area between the support unit 20 and the opposing occlusal surface is further increased by the support unit 20 inclined toward the buccal surface A2 of the appliance 10.

When the second part L12 is located on the lingual side of the first support surface A111, the support unit 20 is inclined toward the lingual surface A3 of the appliance 10, at the time, on the basis of increasing the contact area between the support unit 20 and the opposing occlusal surface by the support unit 20 corresponding to the second part L12, the contact area between the support unit 20 and the opposing occlusal surface is further increased by the support unit 20 inclined toward the lingual surface A3 of the appliance 10, and FIG. 13 takes the case where the second part L12 is located on the lingual side of the first support surface A111 as an example for illustration.

In addition, the support unit 20 arranged obliquely can also reduce the difficulty of demolding.

Optionally, the shape of the end surface 21 of the support unit 20 matches the shape of the opposing occlusal surface.

"The shape of the end surface 21 of the support unit 20 matches the shape of the opposing occlusal surface" means that when the upper and lower jaws occlude, the end surface 21 of the support unit 20 and the opposing occlusal surface can fit together, which can improve the accuracy of the occlusal position and the stability of occlusion, thereby improving the jaw position correction effect.

The present embodiment takes the end surface 21 of the support unit 20 as the irregular shape as an example, i.e., the end surface 21 at the time is the non-planar structure.

Optionally, the support unit 20 is formed surrounding the cavity S1, and the cavity S1 communicates with the cavity S.

The appliance 10 may be the clear aligner made of the polymer material, and the cavity S has the geometry for repositioning the dentition from the current arrangement to the next arrangement. The support unit 20 may be integrally formed with the appliance 10, and the cavity S1 formed by the support unit 20 and the cavity S formed by the appliance 10 communicate with each other.

The support unit 20 forming the cavity S1 is the hollow structure, and the hollow support unit 20 is more prone to collapse, and the shell-shaped dental appliance 100 may further include the filling portion located within the cavity S1, and the filling portion can enhance the strength of the support unit 20 and further prevent the support unit 20 from collapsing.

Optionally, the first peripheral edge line L1 includes the plurality of curved segments, and adjacent curved segments transition smoothly.

Correspondingly, the side surface 22 of the support unit 20 is formed by the plurality of curved surfaces, and adjacent curved surfaces transition smoothly.

The side surface 22 does not include the plane, or rather, there is no right-angle, acute-angle, or obtuse-angle transition on the side surface 22, this allows the occlusal pressure received by the entire support unit 20 to be uniformly distributed, avoiding the stress concentration points on the support unit 20, thereby enhancing the strength of the support unit 20, moreover, when the shell-shaped dental appliance 100 with the support unit 20 is obtained by demolding, the rounded transitions can effectively reduce the difficulty of demolding.

Optionally, the first peripheral edge line L1 includes at least one concave portion and at least one convex portion, and when the first peripheral edge line L1 includes the plurality of concave portions or the plurality of convex portions, the concave portions and the convex portions are alternately connected one by one, that is, the first peripheral edge line L1 at the time is substantially the wavy structure.

It can be understood that the structure between two adjacent convex portions is the concave portion, and similarly, the structure between two adjacent concave portions is the convex portion, and the convex portion can further enhance the strength of the corresponding support unit 20.

The endpoint M of the convex portion is adjacent to the corresponding tip R, wherein the "endpoint M of the convex portion" refers to the highest point of the convex portion, i.e., the peak point of the convex portion, and the endpoint M of the convex portion includes an endpoint M1 of the convex portion at the first part L11 and an endpoint M2 of the convex portion at the second part L12.

The endpoint M of the convex portion and the tip R match each other in position, for example, for a certain posterior tooth, the endpoint M1 of the convex portion of the first part L11 is closer to the center of the posterior tooth than the corresponding tip R, and the spacing between each endpoint M1 of the convex portion and the tip R remains substantially constant; the endpoint M2 of the convex portion of the second part L12 is farther from the center of the posterior tooth than the corresponding tip R, and the spacing between each endpoint M2 of the convex portion and the tip R remains substantially constant, at the time, for posterior teeth of different patients or different posterior teeth of the same patient, the convex portion is customized, so that the support unit 20 matches the corresponding posterior tooth more closely.

In addition, the first peripheral edge line L1 is the symmetrical structure, and the symmetrical structure can enhance the uniformity of force on the corresponding support unit 20.

Next, two specific examples of the shell-shaped dental appliance 100 of the second embodiment are introduced.

In the first specific example, with reference to FIG. 9 to FIG. 15, the first peripheral edge line L1 formed at the junction region between the support unit 20 and the support surface A11 is the closed annular structure, and there is a gap or coincidence between the first part L11 and the mesial end and the distal end of the dividing line L.

That is, the support unit 20 at the time is the independent structure not connected to other structures, and each support unit 20 is independently arranged corresponding to one posterior tooth. At the time, the support unit 20 can be individually formed according to requirements such as the specific size of the posterior tooth and the occlusal pressure to be borne, for example, support units 20 of different shapes and sizes can be individually configured for different posterior teeth.

With reference to FIG. 9, the closed annular structure formed by the first peripheral edge line L1 is substantially in the shape of the plum blossom.

The closed annular structure formed by the first peripheral edge line L1 at posterior tooth No. 16 shown in FIG. 9 is the centrosymmetric structure, and the symmetric structure includes four convex portions and four concave portions, and the four convex portions and the four concave portions are alternately connected one by one, and the four convex portions have the same shape.

The closed annular structure formed by the first peripheral edge line L1 at posterior tooth No. 14 shown in FIG. 9 is the axisymmetric structure, and the symmetric structure includes four convex portions and four concave portions, and the four convex portions and the four concave portions are alternately connected one by one, and two convex portions located on the same straight line have the same shape, and since the size of this posterior tooth in the mesiodistal direction is relatively small, the size of the convex portion of the first peripheral edge line L1 in the mesiodistal direction is also relatively small.

In the specific example, with reference to FIG. 14, the first peripheral edge line L1 is the closed annular structure, and there is a gap between the first part L11 of the first peripheral edge line L1 and the dividing line L, and there is a gap between the first part L11 and the mesial end, the distal end, and the buccal side of the dividing line L, that is, the second part L12 at the time is located only on the lingual side of the first support surface A111.

Specifically, taking the case where there is the first gap P1 between the first part L11 and the dividing line L close to the buccal surface A2 of the appliance 10 as an example, the first part L11 includes the convex portion close to the buccal surface A2, and in the direction from the buccal surface A2 to the lingual surface A3 of the appliance 10, the first gap P1 between the convex portion and the dividing line L is not less than 1 mm.

With reference to FIG. 15, compared to the first peripheral edge line L1 in FIG. 14, a part of the first part L11 in FIG. 15 coincides with the mesial end and the distal end of the dividing line L, that is, the first peripheral edge line L1 in FIG. 15 extends in the mesial direction and the distal direction and contacts the dividing line L, at the time, the first part L11 of the first peripheral edge line L1 still does not extend beyond the dividing line L, the mesial end and the distal end of the first peripheral edge line L1 coincide with the dividing line L, and the first peripheral edge line L1 at the time is still the closed annular structure.

In addition, the first peripheral edge line L1 in FIG. 15 is relatively long, the corresponding support unit 20 is also relatively large in size, and the support unit 20 can provide the larger area to maintain the greater occlusal pressure.

Specifically, taking the case where there is the first gap P1 between the first part L11 and the dividing line L close to the buccal surface A2 of the appliance 10 as an example, the first part L11 includes the convex portion close to the buccal surface A2, and in the direction from the buccal surface A2 to the lingual surface A3 of the appliance 10, the first gap P1 between the convex portion and the dividing line L is not less than 1 mm.

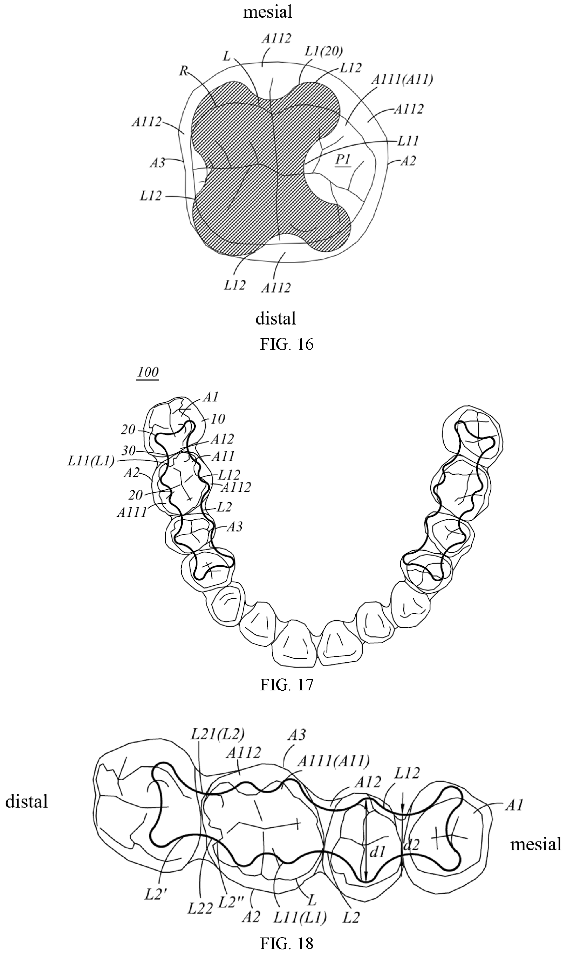

With reference to FIG. 16, which is a schematic diagram of a shell-shaped dental appliance 100 according to the second specific example, and for ease of description, the same or similar structures are denoted by the same or similar reference numerals.

The main difference between the second specific example and the first specific example is that: the second part L12 is also located on a mesial side and/or a distal side of the first support surface A111, and here, the case where the second part L12 is located on the mesial side, the distal side, and the lingual side of the first support surface A111 is taken as an example, and there is a gap between the first part L11 and the buccal side of the dividing line L.

Specifically, taking the case where there is the first gap P1 between the first part L11 and the dividing line L close to the buccal surface A2 of the appliance 10 as an example, the first part L11 includes the convex portion close to the buccal surface A2, and in the direction from the buccal surface A2 to the lingual surface A3 of the appliance 10, the first gap P1 between the convex portion and the dividing line L is not less than 1 mm.

With reference to FIG. 17 to FIG. 19, which are schematic diagrams of a shell-shaped dental appliance 100 according to the third specific example, and for ease of description, the same or similar structures are denoted by the same or similar reference numerals.

In the specific example, the shell-shaped dental appliance 100 further includes the connecting unit 30 located on the occlusal surface A1 of the appliance 10, and the connecting unit 30 connects two support units 20, and the junction region between the connecting unit 30 and the occlusal surface A1 forms the second peripheral edge line L2, and the second peripheral edge line L2 is connected to the first peripheral edge line L1.

That is, the support unit 20 at the time is connected to other structures, and the first peripheral edge line L1 formed at the junction region between one support unit 20 and the support surface A11 is not the closed structure, and the free end of the first peripheral edge line L1 is connected to the second peripheral edge line L2, corresponding to the support unit 20 being connected to the connecting unit 30 to cover the plurality of posterior teeth, and at the time, the plurality of support units 20 can provide the larger area to maintain the greater occlusal pressure.

It should be noted that, taking the case where there is the first gap P1 between the first part L11 and the dividing line L close to the buccal surface A2 of the appliance 10 as an example, the first part L11 includes the convex portion close to the buccal surface A2, and in the direction from the buccal surface A2 to the lingual surface A3 of the appliance 10, the first gap P1 between the convex portion and the dividing line L is not less than 1 mm.

The occlusal surface A1 includes the connecting surface A12 connecting two adjacent support surfaces A11, and the connecting surface A12 actually connects the mesial end of one second support surface A112 and the distal end of another second support surface A112, and the connecting surface A12 is arranged corresponding to the interdental space, the "interdental space" refers to the region between two adjacent teeth.

Since the support unit 20 is connected to the first support surface A111, the connecting unit 30 connecting two adjacent support units 20 is actually connected to the connecting surface A12 and the second support surface A112, that is, the connecting unit 30 extends from the connecting surface A12 to the second support surfaces A112 on both sides to connect the two support units 20 on both sides.

The first peripheral edge line L1 extends in the mesiodistal direction of the appliance 10 and is connected to the second peripheral edge line L2, and the first peripheral edge line L1 and the second peripheral edge line L2 transition smoothly.

The second peripheral edge line L2 is connected to the mesial end or the distal end of the first peripheral edge line L1, and the second peripheral edge line L2 extends to cover the connecting surface A12 and the second support surfaces A112 located on both sides of the connecting surface A12, and the smooth transition between the first peripheral edge line L1 and the second peripheral edge line L2 can further improve the strength of the support unit 20 and the connecting unit 30 and the smoothness of the transition therebetween.

In the specific example, the first peripheral edge line L1 arranged corresponding to a certain posterior tooth can also be regarded as the symmetrical structure, and the first peripheral edge line L1 includes the convex portions and the concave portions to improve the strength of the support unit 20.

The second peripheral edge line L2 includes the lingual side line L21 close to the lingual surface A3 of the appliance 10 and the buccal side line L22 close to the buccal surface A2 of the appliance 10, and the lingual side line L21 is concave toward the buccal side line L22, and the buccal side line L22 is concave toward the lingual side line L21.

In other words, the second peripheral edge line L2 includes the first end L2' connected to one of the first peripheral edge lines L1 and the second end L2" connected to another one of the first peripheral edge lines L1, and in the direction from the buccal surface A2 to the lingual surface A3 of the appliance 10, the second peripheral edge line L2 has the width, and the width first decreases and then increases when transitioning from the first end L2' to the second end L2".

The connecting unit 30 corresponding to the second peripheral edge line L2 generally exhibits the inward shrinking trend.

In the direction from the buccal surface A2 to the lingual surface A3 of the posterior tooth, the width of the occlusal surface of the posterior tooth is greater than the width of the interdental space, when the support unit 20 and the connecting unit 30 receive the occlusal pressure applied by the opposing jaw, the occlusal surface of the posterior tooth provides support for the support unit 20 located on the support surface A11, while the interdental space provides support for the connecting unit 30 located at the interdental space, that is, the relatively wide occlusal surface of the posterior tooth supports the relatively wide support unit 20, and the relatively narrow interdental space supports the relatively narrow connecting unit 30, at the time, there is the tooth (the occlusal surface of the posterior tooth or the interdental space) providing support beneath each of the support unit 20 and the connecting unit 30, preventing the support unit 20 and the connecting unit 30 from deforming or collapsing due to lack of tooth support thereunder.

In addition, in the direction from the buccal surface A2 to the lingual surface A3 of the appliance 10, the first peripheral edge line L1 has the first width d1, and the second peripheral edge line L2 has the second width d2.

Here, both the first width d1 and the second width d2 are the varying widths, the first width d1 is relatively large to correspond to the relatively wide support unit 20 located on the support surface A11, and the second width d2 is relatively small to correspond to the relatively narrow connecting unit 30 located at the interdental space, through the reasonable design of the first width d1 and the second width d2, it can be ensured that there is the tooth providing support beneath each of the support unit 20 and the connecting unit 30, and the first width d1 and the second width d2 can be customized according to the posterior teeth of different patients or different posterior teeth of the same patient.

Specifically, the ratio of the maximum value of the first width d1 to the minimum value of the second width d2 ranges from 0.15 to 0.5, and the minimum value of the second width d2 is not less than 0.5 mm.

It should be noted that since the width of the region in the interdental space that can provide support for the connecting unit 30 is relatively narrow, the relatively narrow second width d2 is required to prevent the connecting unit 30 from lacking tooth support thereunder, when the second width d2 is too narrow, the process difficulty increases, and when the second width d2 is directly zero (i.e., the plurality of support units 20 are spaced apart), the demolding difficulty is greatly increased.

While considering the process difficulty, the demolding difficulty, and making the second width d2 as narrow as possible, the specific example controls the minimum value of the second width d2 to be not less than 0.5 mm, and preferably, the minimum value of the second width d2 ranges from 1 mm to 4 mm.

In addition, the minimum value of the first width d1 is greater than or equal to the maximum value of the second width d2, further ensuring that the first width d1 is relatively large and the second width d2 is relatively small.

In the specific example, the shell-shaped dental appliance 100 includes the plurality of support units 20 and the plurality of connecting units 30 alternately connected one by one, that is, the occlusal surface of the appliance 10 is provided with one support unit 20, one connecting unit 30, one support unit 20, one connecting unit 30, and so on, connected in sequence.

Each connecting unit 30 exhibits the inward shrinking trend, and the degree of inward shrinking of the connecting unit 30 at each interdental space is related to the width of the interdental space.

It can be seen that for posterior teeth of different patients or different posterior teeth of the same patient, the connecting unit 30 at the interdental space is also customized.

In summary, various parameters of the specific example can be customized and configured according to the single case, and the parameters include the first width d1 of the support unit 20, the second width d2 of the connecting unit 30, the relationship between the endpoint M of each convex portion and the tip R, the peak segments and trough segments in the first peripheral edge line L1 and the second peripheral edge line L2, the connection relationship between the first peripheral edge line L1 and the second peripheral edge line L2, the gap between the first peripheral edge line L1 and the dividing line L, etc, in this way, the support unit 20 and the connecting unit 30 can match the posterior tooth more closely, and there is the tooth providing support beneath each part of the support unit 20 and the connecting unit 30.

In summary, the part of the support unit 20 of the second embodiment (the part corresponding to the first part L11) is arranged corresponding to the first support surface A111, and another part (the part corresponding to the second part L12) is arranged corresponding to the second support surface A112. The advantage of such an arrangement is that: the first support surface A111 can provide the stable supporting function for the support unit 20, thereby maintaining the stable occlusal pressure, and the support unit 20 extending to the second support surface A112 can increase the contact area with the opposing occlusal surface, thereby achieving the stable occlusion.

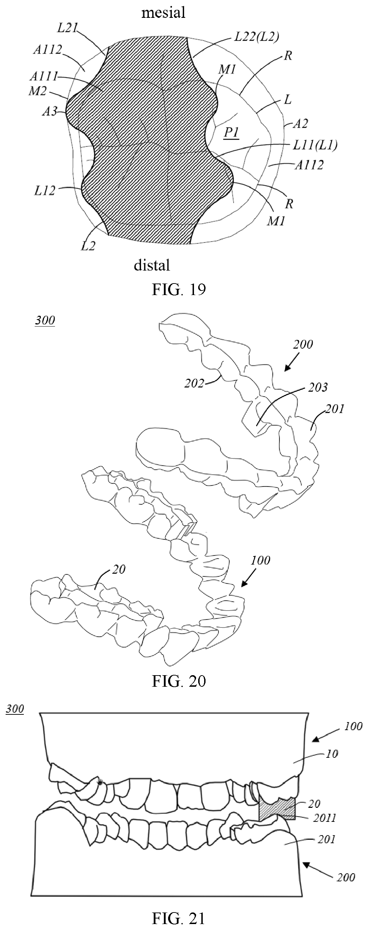

With reference to FIG. 20 and FIG. 21, an embodiment of the present application further provides a shell-shaped dental appliance assembly 300, including the shell-shaped dental appliance 100 as described above and an opposing shell-shaped dental appliance 200.

One of the shell-shaped dental appliance 100 and the opposing shell-shaped dental appliance 200 is arranged corresponding to upper teeth, and the other is arranged corresponding to lower teeth. The shell-shaped dental appliance 100 may be the shell-shaped dental appliance 100 as shown in the first embodiment and the second embodiment described above.

With reference to FIG. 20, in an example, the opposing shell-shaped dental appliance 200 includes an opposing appliance 201 and a guide portion 203 located on an occlusal surface 202 of the opposing appliance 201, and when in an occlusal state, the guide portion 203 and the support unit 20 (or an integral structure formed by the support unit 20 and the connecting unit 30) cooperate with each other in a mesiodistal direction to achieve a horizontal movement of the upper teeth or the lower teeth.

In FIG. 20, the case where the shell-shaped dental appliance 100 is arranged corresponding to the lower teeth and the opposing shell-shaped dental appliance 200 is arranged corresponding to the upper teeth is taken as an example, and the shell-shaped dental appliance 100 includes the integral structure formed by the support unit 20 and the connecting unit 30, and the opposing shell-shaped dental appliance 200 includes the guide portion 203, and when in the occlusal state, a mesial end of the integral structure formed by the support unit 20 and the connecting unit 30 abuts against a distal end of the guide portion 203 to achieve the horizontal movement of the lower teeth, i.e., retrusion of the lower teeth is achieved at the time.

Of course, in other examples, the integral structure formed by the support unit 20 and the connecting unit 30 and the guide portion 203 may cooperate in other forms, for example, a distal end of the integral structure formed by the support unit 20 and the connecting unit 30 abuts against a mesial end of the guide portion 203 to achieve protrusion of the lower teeth.

It can be understood that in order to improve the stability of cooperation between the integral structure formed by the support unit 20 and the connecting unit 30 and the guide portion 203, a friction structure or a concave-convex matching structure may be formed at the abutment therebetween.

With reference to FIG. 21, in another example, the opposing shell-shaped dental appliance 200 includes the opposing appliance 201 having a cavity for accommodating teeth, and when upper and lower jaws are in the occlusal state, the support unit 20 abuts against an opposing occlusal surface of the opposing appliance 201.

The "opposing occlusal surface" may be an occlusal surface 2011 of the opposing appliance 201 or an occlusal surface of an opposing support unit located on the occlusal surface of the opposing appliance 201, and here, the case where the opposing occlusal surface is the occlusal surface 2011 of the opposing appliance 201 is taken as an example.

The support unit 20 of the present embodiment extends to the second support surface A112, which can effectively increase the contact area between the support unit 20 and the opposing occlusal surface, thereby achieving the stable occlusion.

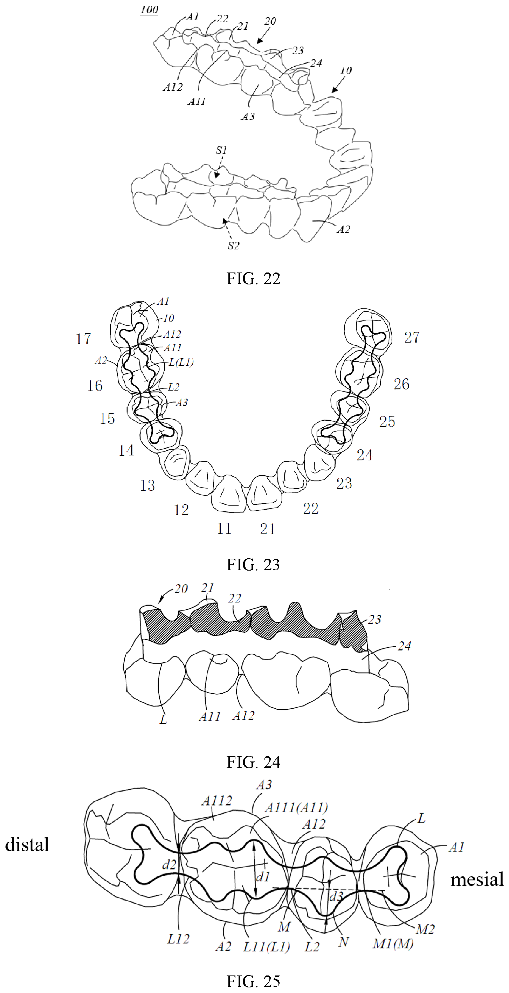

With reference to FIG. 22 to FIG. 24, an embodiment of the present application provides a dental orthodontic appliance 100.

The dental orthodontic appliance 100 includes an appliance body 10 and a bite pad 20 located on an occlusal surface A1 of the appliance body 10, and the bite pad 20 is arranged corresponding to a plurality of posterior teeth in a posterior tooth region.

The occlusal surface A1 includes a first occlusal surface A11 and a second occlusal surface A12 that are connected, the first occlusal surface A11 is arranged corresponding to a tooth occlusal surface, and the second occlusal surface A12 is arranged corresponding to an interdental space.

Here, the "tooth occlusal surface" refers to a lower end surface of each upper tooth or an upper end surface of each lower tooth, and the "interdental space" refers to a region between two adjacent teeth, and the interdental space connects the occlusal surfaces of two adjacent teeth.

In the present embodiment, the bite pad 20 located on the second occlusal surface A12 exhibits an inward shrinking trend.

Here, the bite pad 20 includes a first portion 21 located on the first occlusal surface A11 and a second portion 22 located on the second occlusal surface A12, the first portion 21 and the second portion 22 are connected, and the second portion 22 exhibits the inward shrinking trend compared to the first portion 21, that is, the second portion 22 forms a relatively narrow necked segment.

Here, in a direction from a buccal surface to a lingual surface of a tooth, a width of the tooth occlusal surface is greater than a width of the interdental space, when the bite pad 20 receives an occlusal pressure applied by an opposing jaw, the tooth occlusal surface provides support for the first portion 21 located on the first occlusal surface A11, while the interdental space provides support for the second portion 22 located on the second occlusal surface A12, that is, the relatively wide tooth occlusal surface supports the relatively wide first portion 21, and the relatively narrow interdental space supports the relatively narrow second portion 22, at the time, the proportion of the area of the bite pad 20 supported by teeth is increased, further, it can be ensured that there is a tooth (the tooth occlusal surface or the interdental space) providing support beneath each of the first portion 21 and the second portion 22 of the bite pad 20, preventing the bite pad 20 from deforming or collapsing due to lack of tooth support thereunder.

In the present embodiment, the bite pad 20 includes an outer contour line L formed at a junction region with the occlusal surface A1, an end surface 23 away from the occlusal surface A1, and a side surface 24 connecting a periphery of the end surface 23 and the outer contour line L, and the end surface 23 and the side surface 24 are formed surrounding a cavity S1, the appliance body 10 has a chamber S2 for accommodating teeth, and the cavity S1 communicates with the chamber S2.

Here, the appliance body 10 may be a clear aligner made of a polymer material, and the chamber S2 has a geometry for repositioning a dentition from a current arrangement to a next arrangement, the bite pad 20 may be integrally formed with the appliance body 10, and the cavity S1 formed by the bite pad 20 and the chamber S2 formed by the appliance body 10 communicate with each other.

The bite pad 20 forming the cavity S1 is a hollow structure, and in conjunction with the foregoing description, since the bite pad 20 located on the second occlusal surface A12 of the present embodiment exhibits the inward shrinking trend, the strength of the hollow structure can be enhanced, preventing the hollow structure from being collapsed by biting.

Of course, the dental orthodontic appliance 100 may further include a filling portion located within the cavity S1, and the filling portion can further enhance the strength of the bite pad 20.

In the present embodiment, with reference to FIG. 24, a shape of the end surface 23 of the bite pad 20 matches a shape of an opposing occlusal surface.

Here, the "opposing occlusal surface" may be an occlusal surface of an opposing tooth, an occlusal surface of an opposing appliance body, or an occlusal surface of an opposing bite pad, and "the shape of the end surface 23 of the bite pad 20 matches the shape of the opposing occlusal surface" means that when the upper and lower jaws occlude, the end surface 23 of the bite pad 20 and the opposing occlusal surface can fit together, which can improve the accuracy of the occlusal position and the stability of occlusion, thereby improving the jaw position correction effect.

With reference to FIG. 24, the present embodiment takes the end surface 23 of the bite pad 20 as an irregular shape as an example, i.e., the end surface 23 at the time is a non-planar structure.

In addition, since the outer contour line L is located on the occlusal surface A1 of the appliance body 10, a plurality of points forming the outer contour line L are not substantially on the same plane, therefore, a "reference plane enclosed by the plurality of points on the outer contour line L" is used here to represent the plane enclosed by the outer contour line L, and a reference plane passing through as many points on the outer contour line L as possible is taken as the standard.

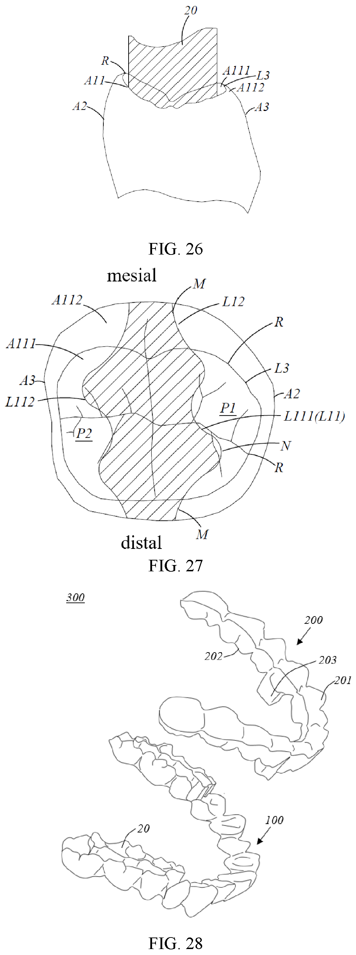

In an embodiment, the side surface 24 is perpendicular to the reference plane, that is, at the time, it can be considered that the bite pad 20 is substantially arranged perpendicular to the occlusal surface A1 of the appliance body 10 (with reference to the schematic diagram of FIG. 26), and a contour line of an orthographic projection of the bite pad 20 onto the occlusal surface A1 is the outer contour line L.

In another embodiment, at least a part of the side surface 24 forms an acute angle with the reference plane, that is, the bite pad 20 is arranged obliquely relative to the occlusal surface A1.

Specifically, the side surface 24 located at a distal end of the bite pad 20 forms the acute angle with the reference plane, that is, the side surface 24 as a whole is arranged inclined toward the center of the bite pad 20, at the time, when the dental orthodontic appliance 100 with the bite pad 20 is obtained by demolding, the side surface 24 at the distal side arranged obliquely can effectively reduce the difficulty of demolding.

Alternatively, the side surfaces 24 of the bite pad 20 close to a buccal surface A2 and a lingual surface A3 of the appliance body 10 each form an acute angle with the reference plane, which can also reduce the difficulty of demolding.

It can be understood that when the acute angle is formed between the side surface 24 and the reference plane, a dimension of an orthographic projection of an edge of the side surface 24 away from the outer contour line L onto the occlusal surface A1 is smaller than the outer contour line L, that is, the entire bite pad 20 has a structure that is narrower at the top and wider at the bottom, which can effectively improve the strength of the bite pad 20.

In the present embodiment, with reference to FIG. 25 to FIG. 27, the outer contour line L formed at the junction region between the bite pad 20 and the occlusal surface A1 is located on the occlusal surface A1, and the outer contour line L extends to cover a part of the first occlusal surface A11 and a part of the second occlusal surface A12.

In the direction from the buccal surface A2 to the lingual surface A3 of the appliance body 10, the outer contour line L has a width, and the width shows a decreasing trend when transitioning from the first occlusal surface A11 to the second occlusal surface A12.

Here, "transitioning from the first occlusal surface A11 to the second occlusal surface A12" refers to extending from a region of the first occlusal surface A11 close to the second occlusal surface A12 to the second occlusal surface A12, rather than extending from the entire first occlusal surface A11 to the second occlusal surface A11.

That is, the outer contour line L located on the second occlusal surface A12 is relatively narrow, and the bite pad 20 corresponding to this part of the outer contour line L is the second portion 22 located on the second occlusal surface A12, and in other words, the relatively narrow outer contour line L corresponds to the bite pad 20 exhibiting the inward shrinking trend.

In addition, the outer contour line L is formed by a plurality of curved segments, and adjacent curved segments transition smoothly.

Correspondingly, the side surface 24 is formed by a plurality of curved surfaces, and adjacent curved surfaces transition smoothly.

That is, the side surface 24 does not include a plane, or rather, there is no right-angle, acute-angle, or obtuse-angle transition on the side surface 24, this allows the occlusal pressure received by the entire bite pad 20 to be uniformly distributed, avoiding stress concentration points on the bite pad 20, thereby further enhancing the strength of the bite pad 20, moreover, when the dental orthodontic appliance 100 with the bite pad 20 is obtained by demolding, the rounded transitions can effectively reduce the difficulty of demolding.

In the present embodiment, the outer contour line L includes a first outer contour line L1 corresponding to the first occlusal surface A11 and a second outer contour line L2 corresponding to the second occlusal surface A12, and in the direction from the buccal surface A2 to the lingual surface A3 of the appliance body 10, a width of the first outer contour line L1 is a first width d1, and a width of the second outer contour line L2 is a second width d2.

Here, both the first width d1 and the second width d2 are varying widths, the first width d1 is relatively large to correspond to the relatively wide first portion 21 located on the first occlusal surface A11, and the second width d2 is relatively small to correspond to the relatively narrow second portion 22 located on the second occlusal surface A12, through reasonable design of the first width d1 and the second width d2, it can be ensured that there is a tooth providing support beneath each of the first portion 21 and the second portion 22 of the bite pad 20, and the first width d1 and the second width d2 can be customized according to the posterior teeth of different patients or different posterior teeth of the same patient.

Specifically, a ratio of a maximum value of the first width d1 to a minimum value of the second width d2 ranges from 0.15 to 0.5, and the minimum value of the second width d2 is not less than 0.5 mm.

It should be noted that since the width of the region in the interdental space that can provide support for the second portion 22 of the bite pad 20 is relatively narrow, the relatively narrow second width d2 is required to prevent the second portion 22 from lacking tooth support thereunder, when the second width d2 is too narrow, the process difficulty increases, and when the second width d2 is directly zero (i.e., a plurality of first portions 21 are spaced apart), the demolding difficulty is greatly increased.

While considering the process difficulty, the demolding difficulty, and making the second width d2 as narrow as possible, the present embodiment controls the minimum value of the second width d2 to be not less than 0.5 mm, and preferably, the minimum value of the second width d2 ranges from 1 mm to 4 mm.

In addition, a minimum value of the first width d1 is greater than or equal to a maximum value of the second width d2, further ensuring that the first width d1 is relatively large and the second width d2 is relatively small.

In the present embodiment, the first outer contour line L1 corresponding to one tooth includes a first peak segment, a first trough segment, and a second peak segment that are connected, or the first outer contour line L1 corresponding to one tooth includes a first trough segment, a first peak segment, and a second trough segment that are connected.

For example, a distal part of the first outer contour line L1 of posterior tooth No. 17 in FIG. 23 includes the first peak segment, the first trough segment, and the second peak segment that are connected, a part of the first outer contour line L1 of posterior tooth No. 15 close to the lingual surface A3 includes the first trough segment, the first peak segment, and the second trough segment that are connected.

That is, the first outer contour line L1 may include the peak segment and the trough segment that are connected, so that a protruding structure can be formed at the first outer contour line L1, and the protruding structure can further enhance the strength of the corresponding bite pad 20.

With reference to FIG. 25, the second outer contour line L2 is a trough segment, and the second outer contour line L2 includes a first trough segment close to the lingual surface A3 and a second trough segment close to the buccal surface A2, and the first trough segment and the second trough segment are arranged correspondingly so that the second width of the second outer contour line L2 first decreases and then increases in the mesiodistal direction.

In the present embodiment, with reference to FIG. 25 to FIG. 27, the first occlusal surface A11 includes a first region A111 located in a middle portion and a second region A112 surrounding the first region A111, and a dividing line L3 between the first region A111 and the second region A112 passes through a plurality of tips R, the plurality of tips R respectively correspond to a plurality of cusps of a posterior tooth.

Here, the first region A111 is a central region of the first occlusal surface A11, the first region A111 corresponds to a central concave portion in FIG. 26, the second region A112 is a peripheral region of the first occlusal surface A11, and the second region A112 corresponds to a peripheral inclined portion in FIG. 26 (i.e., the second region A112 connects the buccal surface A2, the lingual surface A3, and a non-action area A12), if the bite pad 20 is arranged corresponding to the first region A111, the entire first region A111 can provide a stable supporting function, which can improve the stability of the bite pad 20 under occlusal pressure, if the bite pad 20 is arranged corresponding to the second region A112, the inclined surface bears the occlusal pressure, and the supporting function of the inclined surface is unstable and prone to side-slip collapse.

Here, with reference to FIG. 27, the junction region between the bite pad 20 and the first occlusal surface A11 forms the first outer contour line L1, the first outer contour line L1 includes an inner line L11 located in the first region A111 and an outer line L12 located in the second region A112, and the outer line L12 is connected to the inner line L11 only in the mesiodistal direction of the appliance body 10.

That is, on the first occlusal surface A11, most of the first portion 21 of the bite pad 20 is arranged corresponding to the first region A111, and only a small part is arranged corresponding to the second region A112 to connect to the second portion 22 of the bite pad 20 at the second occlusal surface A12, the advantage of such an arrangement is that: most of the bite pad 20 corresponding to the first occlusal surface A11 is supported by the first region A111, and the first region A111 can provide a stable supporting function for the bite pad 20, thereby maintaining a stable occlusal pressure.

In addition, the inner line L11 includes a first inner line L111 close to the buccal surface A2 of the appliance body 10 and a second inner line L112 close to the lingual surface A3 of the appliance body 10, and there is a first gap P1 between the first inner line L111 and the corresponding dividing line L3, and there is a second gap P2 between the second inner line L112 and the corresponding dividing line L3.

In other words, in the direction from the buccal surface A2 to the lingual surface A3 of the appliance body 10, there is a gap between the first outer contour line L1 and the dividing line L3 to ensure that the corresponding bite pad 20 is located in the first region A111.

Specifically, the first inner line L111 includes a peak segment, and in the direction from the buccal surface A2 to the lingual surface A3 of the appliance body 10, the first gap P1 between the peak segment and the dividing line L3 is not less than 1 mm.

The second inner line L112 includes a peak segment, and in the direction from the buccal surface A2 to the lingual surface A3 of the appliance body 10, the second gap P2 between the peak segment and the dividing line L3 is not less than 1 mm.

In the mesiodistal direction, since it is necessary to connect to the second outer contour line L2, the first outer contour line L1 extends out of the dividing line L3 to form the outer line L12 located in the second region A112. The outer line L12 substantially connects the inner line L11 and the second outer contour line L2, and the second outer contour line L2 and the outer lines L12 at both ends form a trough segment M.

Here, the outer line L12 and the second outer contour line L2 transition smoothly, and taking the outer line L12 and the second outer contour line L2 close to the lingual surface A3 of the appliance body 10 as an example, the second outer contour line L2 and the outer lines L12 at both ends are connected to form a curve, and the curve bends toward the buccal surface A2 to form the trough segment M.

At the time, when transitioning from one second region A112 to another adjacent second region A112 via the second occlusal surface A12, the width of the outer contour line L first decreases and then increases in the mesiodistal direction, thereby obtaining the second outer contour line L2 with a smaller width and improving the smoothness of the transition between the first outer contour line L1 and the second outer contour line L2.

In the present embodiment, continuing with reference to FIG. 25 to FIG. 27, taking the first inner line L111 as an example, the first inner line L111 includes the peak segment N, and endpoints M1 of two trough segments M located on the same side and adjacent to each other (i.e., two trough segments M both arranged close to the buccal surface A2 form a reference line M2, and a maximum distance d3 between the peak segment N and the reference line M2 on the same side is not less than 0.5 mm.

Here, the two trough segments M are substantially flush, the reference line M2 is substantially a tangent line to the two trough segments M, and the maximum distance d3 is a distance by which the peak segment N protrudes beyond the reference line M2, by controlling the maximum distance d3, the first width d1 of the first outer contour line L1 and the second width d2 of the second outer contour line L2 can be further controlled. For posterior teeth of different patients or different posterior teeth of the same patient, the maximum distance d3 can be customized to ensure that there is a tooth providing support beneath the bite pad 20.

Preferably, the maximum distance d3 ranges from 1 mm to 3 mm.

In the present embodiment, an endpoint of each peak segment N is adjacent to the corresponding tip R, that is, the endpoint of the peak segment N and the tip R match each other in position, for example, for a certain posterior tooth, the endpoint of each peak segment N is closer to the center of the posterior tooth than the corresponding tip R, and the spacing between the endpoint of each peak segment N and the tip R remains substantially constant, at the time, for posterior teeth of different patients or different posterior teeth of the same patient, the peak segment N is customized, so that the bite pad 20 matches the corresponding posterior tooth more closely.

In addition, the bite pad 20 includes a plurality of first occlusal surfaces A11 and a plurality of second occlusal surfaces A12 alternately connected one by one, that is, the bite pad 20 includes one first occlusal surface A11, one second occlusal surface A12, one first occlusal surface A11, one second occlusal surface A12, and so on, connected in sequence.

The bite pad 20 at each second occlusal surface A12 exhibits the inward shrinking trend, and the degree of inward shrinking of the bite pad 20 at each second occlusal surface A12 is related to the width of the interdental space corresponding to the second occlusal surface A12.

It can be seen that for posterior teeth of different patients or different posterior teeth of the same patient, the bite pad 20 at the second occlusal surface A12 is also customized.

In summary, various parameters of the bite pad 20 of the present embodiment can be customized and configured according to a single case, and the parameters include the first width d1 of the first portion 21 of the bite pad 20, the second width d2 of the second portion 22 of the bite pad 20, the maximum distance d3 between the peak segment N and the reference line M2, the relationship between the endpoint of each peak segment N and the tip R, the first gap P1, the second gap P2, the peak segments and trough segments in the first outer contour line L1 and the second outer contour line L2, the connection relationship between the first outer contour line L1 and the second outer contour line L2, etc, in this way, the bite pad 20 can match the posterior tooth more closely, and there is a tooth providing support beneath each part of the bite pad 20.

With reference to FIG. 28, an embodiment of the present application further provides a dental orthodontic appliance assembly 300, including the dental orthodontic appliance 100 as described above and an opposing dental orthodontic appliance 200.

One of the dental orthodontic appliance 100 and the opposing dental orthodontic appliance 200 is arranged corresponding to upper teeth, and the other is arranged corresponding to lower teeth.

The opposing dental orthodontic appliance 200 includes an opposing appliance body 201 and a guide portion 203 located on an occlusal surface 202 of the opposing appliance body 201, when in an occlusal state, the guide portion 203 and the bite pad 20 cooperate with each other in a mesiodistal direction to achieve a horizontal movement of the upper teeth or the lower teeth.

In FIG. 28, the case where the dental orthodontic appliance 100 is arranged corresponding to the lower teeth and the opposing dental orthodontic appliance 200 is arranged corresponding to the upper teeth is taken as an example, and the dental orthodontic appliance 100 includes the bite pad 20, and the opposing dental orthodontic appliance 200 includes the guide portion 203, and when in the occlusal state, a mesial end of the bite pad 20 abuts against a distal end of the guide portion 203 to achieve the horizontal movement of the lower teeth, i.e., retrusion of the lower teeth is achieved at the time.

Of course, in other embodiments, the bite pad 20 and the guide portion 203 may cooperate in other forms, for example, a distal end of the bite pad 20 abuts against a mesial end of the guide portion 203 to achieve protrusion of the lower teeth.

It can be understood that in order to improve the stability of cooperation between the bite pad 20 and the guide portion 203, a friction structure or a concave-convex matching structure may be formed at the abutment therebetween.

In summary, in the present embodiment, the bite pad 20 located on the second occlusal surface A12 is designed as an inward shrinking structure, which can increase the proportion of the area of the bite pad supported by teeh, further, it can be ensured that there is a tooth providing support beneath each part of the bite pad 20, preventing the bite pad 20 from deforming or collapsing due to lack of tooth support thereunder, moreover, the smooth transition of the entire side surface 24 of the bite pad 20 can further improve the strength of the entire bite pad 20.

In addition, most of the bite pad 20 used to receive the occlusal pressure is located in the first region A111 of the first occlusal surface A11, which can improve the stability of the bite pad 20 under the occlusal pressure.

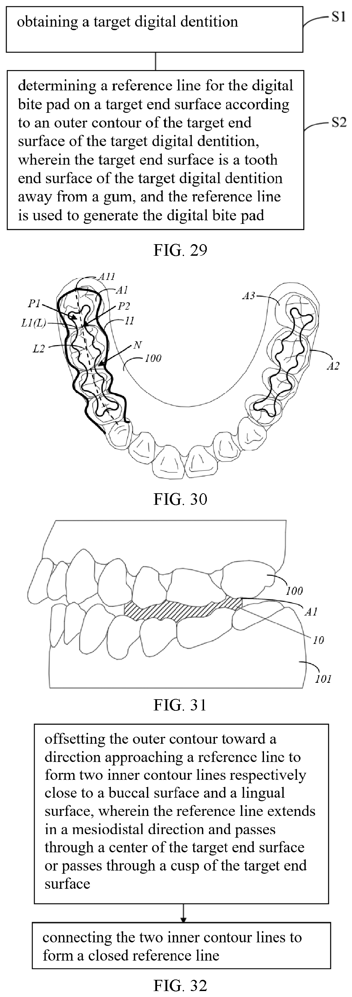

With reference to FIG. 29 to FIG. 31, an embodiment of the present application provides a method for designing a digital bite pad 10. The design method includes the steps of:
Step S1: obtaining a target digital dentition 100.

Optionally, the target digital dentition 100 may be a three-dimensional digital dentition model, and the target digital dentition 100 may be an upper jaw or a lower jaw of a patient, and in addition, the target digital dentition 100 may be a complete dentition or a partial dentition.

There are various ways to obtain the target digital dentition 100, and for example, the target digital dentition 100 may be obtained from the outside, or received, or the target digital dentition 100 may also be called from an internal storage, or alternatively, the target digital dentition 100 may be obtained by performing certain data processing.

Step S2: determining a reference line L for the digital bite pad 10 on a target end surface A1 according to an outer contour 11 of the target end surface A1 of the target digital dentition 100, and the target end surface A1 is a tooth end surface of the target digital dentition 100 away from a gum, and the reference line L is used to generate the digital bite pad 10.

Optionally, the tooth end surface of the target digital dentition 100 away from the gum may be an occlusal surface of the target digital dentition 100, and the target end surface A1 is a surface sandwiched between a buccal surface A2 and a lingual surface A3.

The "outer contour 11" may be a contour corresponding to an outermost edge region of the target end surface A1, and for example, the outer contour 11 includes a boundary line between the target end surface A1 and the buccal surface A2, and a boundary line between the target end surface A1 and the lingual surface A3.

The outer contour 11 is a contour line of the target end surface A1.

Optionally, the outer contour 11 may not completely match each tooth, and for example, the outer contour 11 does not extend into an interdental space N to completely match a mesial end surface and a distal end surface of a tooth, and in other words, the outer contour 11 corresponds to an outer contour of an occlusal surface of a finally formed appliance.

Optionally, the reference line L may be a solid line or a virtual line, and a solid line is defined as a line that is directly displayed on the target end surface A1 during the design process, and at the time, the reference line L may be a continuous line or a discontinuous line generated on the target end surface A1; a virtual line is defined as a line that is not directly displayed on the target end surface A1 during the design process, and subsequently, for example, the digital bite pad 10 may be generated directly according to coordinate information corresponding to the virtual line.

Optionally, during the design process, one or more of the target end surface A1 of the target digital dentition 100, the outer contour 11, and the reference line L may be displayed, but the present application is not limited thereto.

For example, the target end surface A1 may be displayed on a display interface, and in actual operation, the target end surface A1 may be displayed by rotating the target digital dentition 100, or by clicking a specific button, etc, the target digital dentition 100 may be displayed as a single jaw, or as a side view, or as an open view, etc.

Optionally, taking the target digital dentition 100 as an upper jaw as an example, the target end surface A1 of the upper jaw has a larger size, and a larger digital bite pad 10 can be generated, thereby improving the occlusal stability of the subsequently formed bite pad.

In the present embodiment, the reference line L is determined according to the outer contour 11, and then the digital bite pad 10 is generated according to the reference line L, that is, the digital bite pad 10 of the present embodiment is generated based on the outer contour 11 of the target end surface A1, for different patients with different outer contours 11, the present embodiment can determine different reference lines L to generate different digital bite pads 10, that is, the present embodiment can individually design the digital bite pad 10 according to the outer contour 11 of the target end surface A1 of each patient, which can greatly improve the patient experience.

Optionally, the reference line L of the target end surface A1 is determined according to at least one of the following: a shape of the outer contour 11 of the target end surface A1 and a tooth support capability of the target end surface A1, and the following is illustrated by way of methods one to four.

Method one: with reference to FIG. 32, illustrating a method for determining the reference line L according to method one of the present application, including: offsetting the outer contour 11 toward a direction approaching a reference line to form two inner contour lines L1 respectively close to the buccal surface A2 and the lingual surface A3, the reference line extending in a mesiodistal direction and passing through a center of the target end surface A1 or passing through a cusp R of the target end surface A1, and connecting the two inner contour lines L1 to form a closed reference line L.

Optionally, taking the reference line as a center line A11 passing through the center of the target end surface A1 as an example, method one offsets the outer contour 11 toward a middle region enclosed by the outer contour 11.

"The two inner contour lines L1 respectively close to the buccal surface A2 and the lingual surface A3" may refer to a first inner contour line close to the buccal surface A2 and a second inner contour line close to the lingual surface A3, and the first inner contour line and the second inner contour line are connected to form the reference line L; or may refer to a first inner contour line close to the buccal surface A2 and the lingual surface A3 on the left side of the jaw and a second inner contour line close to the buccal surface A2 and the lingual surface A3 on the right side of the jaw, and the first inner contour line is connected to form the reference line L located on the left side of the jaw, and the second inner contour line is connected to form the reference line L located on the right side of the jaw.

Optionally, the center line A11 is substantially a midline of the target end surface A1 in the mesiodistal direction, and the two inner contour lines L1 are located inside the outer contour 11, and there is a gap between each inner contour line L1 and the corresponding region of the outer contour 11.

Method one forms the reference line L by offsetting the outer contour 11 toward the center line A11 direction, and the reference line L is located on the target end surface A1 and does not extend to the outer contour 11, that is, the generated digital bite pad 10 is substantially located in a middle part of the target end surface A1, and most of the subsequently formed bite pad is supported by the middle region of the target end surface A1, and the supporting function is more stable, so as to ensure that the subsequently formed bite pad can stably bear the occlusal pressure.

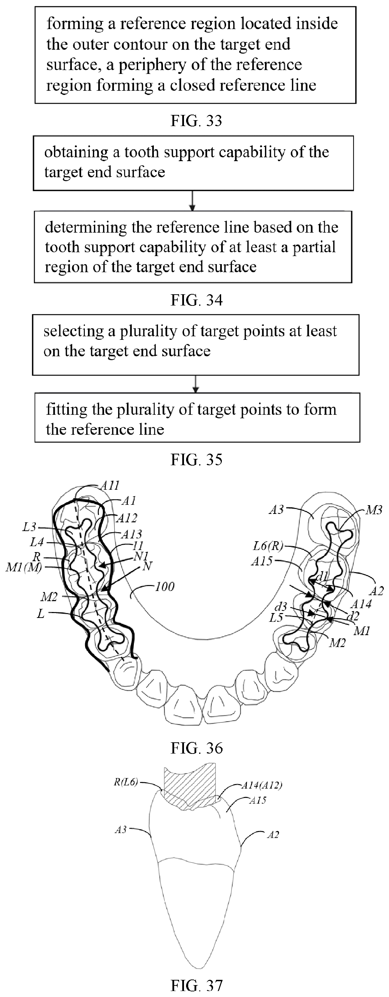

Method two: with reference to FIG. 33, illustrating a method for determining the reference line L according to method two of the present application, including: forming a reference region L2 located inside the outer contour 11 on the target end surface A1, a periphery of the reference region L2 forming a closed reference line L.

The reference region L2 may be one or more regions having a certain area located inside the outer contour 11.

The reference line L is formed by forming the reference region L2, and similarly, the reference line L is located on the target end surface A1 and does not extend to the outer contour 11, thus ensuring that the subsequently formed bite pad can stably bear the occlusal pressure.

Method three: with reference to FIG. 34, illustrating a method for determining the reference line L according to method three of the present application, including: obtaining the tooth support capability of the target end surface A1, and determining the reference line L based on the tooth support capability of at least a partial region of the target end surface A1.

Optionally, the "tooth support capability" refers to the supporting capability of a tooth in the corresponding region for a bite pad when a subsequently formed appliance with the bite pad is worn on the patient's teeth, and when the region has a tooth, the tooth support capability of the region is relatively strong; when the region does not have a tooth or the corresponding tooth area is small (e.g., the region corresponds to the interdental space N), the tooth support capability of the region is relatively weak.

Method three can determine the reference line L according to the tooth support capability of at least the partial region, so that when the subsequently formed appliance with the bite pad is worn on the patient's teeth, there is a sufficient proportion of teeth beneath the bite pad to provide sufficient supporting capability for the bite pad.

Optionally, a first method for determining the reference line L in method three includes:
Determining a spacing between the reference line L and the center line A11 according to the tooth support capability, and the spacing is a spacing in a buccolingual direction, and the spacing is proportional to the tooth support capability.

Since the center line A11 is the midline of the target end surface A1 in the mesiodistal direction, the closer to the center line A11 of the target end surface A1, the relatively larger the tooth area, and the relatively larger the tooth support capability, and therefore, the spacing between the reference line L and the center line A11 can be reasonably designed according to the tooth support capability.

"The spacing is proportional to the tooth support capability" may mean: when the tooth support capability is greater than a preset value, set a first spacing P1 between the reference line L and the center line A11 in that region; when the tooth support capability is not greater than the preset value, set a second spacing P2 between the reference line L and the center line A11 in that region, and the first spacing P1 is greater than the second spacing P2, and the first spacing P1 and the second spacing P2 are spacings in the buccolingual direction, and the buccolingual direction is a direction from the buccal surface A2 to the lingual surface A3 or the opposite direction thereof.

For different regions of the target end surface A1, both the first spacing P1 and the second spacing P2 may be varying values, only needing to ensure that the first spacing P1 is greater than the second spacing P2.

A plurality of regions on the target end surface A1 may be traversed to generate a plurality of first spacings P1 and second spacings P2, thereby forming the complete reference line L.

When the tooth support capability is weak, a relatively small second spacing P2 needs to be set to make the reference line L as close as possible to the center line A11, which can increase the proportion of teeth corresponding to the digital bite pad 10 in that region, and thus, when the subsequently formed appliance with the bite pad is worn on the patient's teeth, a higher proportion of teeth provide support beneath the bite pad, preventing the bite pad from deforming or collapsing due to lack of tooth support thereunder.

By designing different first spacings P1 and second spacings P2, a concave-convex reference line L can be formed, and the reference line L is individually designed according to the tooth support capability of each region of the target end surface A1 of each patient, which can improve the deformation resistance of different bite pads corresponding to different patients.

Optionally, a second method for determining the reference line L in method three includes:
Selecting a plurality of target points on the target end surface A1 according to the tooth support capability, a vertical distance from a target point to the center line A11 being proportional to the tooth support capability, and fitting the plurality of target points to form the reference line L.

The difference between the second determination method and the first determination method described above is that: the second determination method selects target points according to the tooth support capability, and for example, a first target point M1 and a second target point M2 are selected on the target end surface A1 according to different tooth support capabilities, and the first target point M1 corresponds to a region with a relatively strong tooth support capability, and the second target point M2 corresponds to a region with a relatively weak tooth support capability; "The vertical distance from a target point to the center line A11 being proportional to the tooth support capability" may mean that the first target point M1 located on the same side deviates more from the center line A11 than the second target point M2.

When the tooth support capability is weak, a relatively small vertical distance needs to be set to make the target point as close as possible to the center line A11, which can increase the proportion of teeth corresponding to the digital bite pad 10 in that region, and thus, when the subsequently formed appliance with the bite pad is worn on the patient's teeth, a higher proportion of teeth provide support beneath the bite pad, preventing the bite pad from deforming or collapsing due to lack of tooth support thereunder.

Method four: with reference to FIG. 35 to FIG. 39, illustrating a method for determining the reference line L according to method four of the present application, including: selecting a plurality of target points M at least in a posterior tooth region of the target end surface A1, and fitting the plurality of target points M to form the reference line L.

Optionally, the plurality of target points M are mainly in the posterior tooth region, and of course, the target points M may also extend to part of an anterior tooth region.

Optionally, the selection of the target points M may take into account, for example, the tooth support capability of different regions of the target end surface A1, the geometric shape of the target end surface A1, the occlusal relationship between the target end surface A1 and an opposing tooth, etc, by reasonably selecting the target points M, a reference line L that better matches the patient's needs can be obtained, which can greatly improve the patient experience.

Optionally, a first method for determining the reference line L in method four includes:
Selecting a plurality of first target points M1 in the posterior tooth region of the target end surface A1, the first target points M1 being adjacent to posterior tooth cusps;
and/or selecting a plurality of second target points M2 in the posterior tooth region of the target end surface A1, the second target points M2 being located in at least one of an interdental space N and a fossa region N1;
and fitting the plurality of first target points M1 and/or the second target points M2 to form the reference line L.

Optionally, the first target point M1 located on the same side deviates more from the center line A11 than the second target point M2.

Optionally, the first method for determining the reference line L in method four may include three specific methods: only fitting the plurality of first target points M1 to form the reference line L, or only fitting the plurality of second target points M2 to form the reference line L, or fitting both the plurality of first target points M1 and the plurality of second target points M2 to form the reference line L.

Optionally, the first target points M1 are adjacent to the posterior tooth cusps R, and the second target points M2 are located in the interdental space N, and at the time, the region of the reference line L corresponding to the interdental space N exhibits an inward shrinking trend, that is, the reference line L forms a necked segment at the interdental space N, which can enhance the strength of a subsequently formed hollow bite pad, preventing the hollow bite pad from being collapsed by biting.

For help in description, the target end surface A1 is divided into a first end surface A12 and a second end surface A13 that are connected, and the first end surface A12 is a tooth surface region having the posterior tooth cusps R, and the second end surface A13 corresponds to the interdental space N, and a region enclosed by the reference line L is divided into a first part L3 and a second part L4 that are connected, and the first part L3 includes the first target points M1 and is located on the first end surface A12, and the second part L4 includes the second target points M2 and is located on the second end surface A13.

In the buccolingual direction, a width of the first end surface A12 is greater than a width of the second end surface A13, and a width of the first part L3 is greater than a width of the second part L4, and when the subsequently formed appliance with the bite pad is worn on the patient's teeth and receives an occlusal pressure applied by the opposing jaw, the first end surface A12 provides support for the bite pad corresponding to the first part L3, and the second end surface A13 provides support for the bite pad corresponding to the second part L4, that is, the relatively wide first end surface A12 supports the relatively wide first part L3, and the relatively narrow second end surface A13 supports the relatively narrow second part L4, and at the time, the proportion of the area of the bite pad supported by teeth is increased, further, it can be ensured that the proportion of teeth providing support beneath the first part L3 and the second part L4 is relatively large, preventing the bite pad from deforming or collapsing due to lack of tooth support (or insufficient proportion of teeth providing support) thereunder.

Optionally, in other specific embodiments, the second target points M2 may be located in the fossa region N1, or the second target points M2 may be located in the interdental space N and the fossa region N1.

The fossa region N1 is defined as a region between a plurality of cusps R of the same posterior tooth, that is, the region of the reference line L corresponding to the fossa region N1 also exhibits an inward shrinking trend, which can further enhance the strength of the subsequently formed hollow bite pad.

Optionally, in the buccolingual direction, the width of the first part L3 is a first width d1, and the width of the second part L4 is a second width d2.

Here, both the first width d1 and the second width d2 are varying widths, through reasonable design of the first width d1 and the second width d2, it can be ensured that there is a tooth providing support beneath each of the first part L3 and the second part L4 of the subsequently formed bite pad, and the first width d1 and the second width d2 can be customized according to the posterior teeth of different patients or different posterior teeth of the same patient.

Specifically, a ratio of a maximum value of the first width d1 to a minimum value of the second width d2 ranges from 0.15 to 0.5, and the minimum value of the second width d2 is not less than 0.5 mm.

It should be noted that since the width of the region in the interdental space N that can provide support for the bite pad corresponding to the second part L4 is relatively narrow, the relatively narrow second width d2 is required to prevent the second part L4 from lacking tooth support thereunder, when the second width d2 is too narrow, the process difficulty increases, and when the second width d2 is directly zero, the demolding difficulty is greatly increased.

While considering the process difficulty, the demolding difficulty, and making the second width d2 as narrow as possible, the specific embodiment controls the minimum value of the second width d2 to be not less than 0.5 mm, and preferably, the minimum value of the second width d2 ranges from 1 mm to 4 mm.

The minimum value of the first width d1 is greater than or equal to the maximum value of the second width d2, further ensuring that the first width d1 is relatively large and the second width d2 is relatively small.

Optionally, the first end surface A12 includes a first region A14 located in a middle portion and a second region A15 surrounding the first region A14, and a dividing line L6 between the first region A14 and the second region A15 passes through a plurality of cusps R.

The first region A14 is a central region of the first end surface A12, and the first region A14 corresponds to a central concave portion in FIG. 36, and the second region A15 is a peripheral region of the first end surface A12, and the second region A15 corresponds to a peripheral inclined portion in FIG. 36 (i.e., the second region A15 connects the buccal surface A2, the lingual surface A3, and the second end surface A13), if the subsequently formed bite pad is arranged corresponding to the first region A14, the entire first region A14 can provide a stable supporting function, which can improve the stability of the bite pad under occlusal pressure, if the subsequently formed bite pad is arranged corresponding to the second region A15, the inclined surface bears the occlusal pressure, and the supporting function of the inclined surface is unstable and prone to side-slip collapse.

Most of the first part L3 is arranged corresponding to the first region A14, and only a small part is arranged corresponding to the second region A15 to connect to the second part L4, and the advantage of such an arrangement is that: most of the bite pad corresponding to the first end surface A12 is supported by the first region A14, and the first region A14 can provide a stable supporting function for the bite pad, thereby maintaining a stable occlusal pressure.

The first target points M1 are adjacent to the cusps R, and there is a first gap T1 between the reference line L passing through the first target points M1 and the corresponding dividing line L6, and in other words, in the buccolingual direction, there is a gap between the reference line L and the dividing line L6 to ensure that the subsequently formed bite pad is located in the first region A14.

The first target points M1 are adjacent to the corresponding cusps R, that is, the first target points M1 and the cusps R match each other in position, for example, for a certain posterior tooth, the first target points M1 are closer to the center of the posterior tooth than the corresponding cusps R, and the spacing between the first target points M1 and the cusps R remains substantially constant, at this time, for posterior teeth of different patients or different posterior teeth of the same patient, the first target points M1 are customized, so that the subsequently formed bite pad matches the corresponding posterior tooth more closely.

Optionally, the fitted reference line L includes two curves respectively close to the buccal surface A2 and the lingual surface A3, and the first target points M1 are protruding points of one of the curves relative to the other curve, and the second target points M2 are concave points of one of the curves relative to the other curve.

"The two curves respectively close to the buccal surface A2 and the lingual surface A3" may refer to a first curve close to the buccal surface A2 and a second curve close to the lingual surface A3; or may refer to a first curve close to the buccal surface A2 and the lingual surface A3 on the left side of the jaw and a curve close to the buccal surface A2 and the lingual surface A3 on the right side of the jaw.

Optionally, a line connecting two adjacent second target points M2 is L5, and a maximum distance d3 between a first target point M1 and the line L5 on the same side is not less than 0.5 mm.

The line L5 is substantially a tangent line to the two second target points M2, and the maximum distance d3 is a distance by which the first target point M1 protrudes beyond the line L5, by controlling the maximum distance d3, the first width d1 and the second width d2 can be further controlled, for posterior teeth of different patients or different posterior teeth of the same patient, the maximum distance d3 can be customized to ensure that there is a tooth providing support beneath the subsequently formed bite pad.

Preferably, the maximum distance d3 ranges from 1 mm to 3 mm.

Optionally, a second method for determining the reference line L in method four includes:
Selecting at least one third target point M3 in the posterior tooth region of the target end surface A1, the third target point M3 being located in the fossa region N1, the third target point M3 being used to form the reference line L; the third target point M3 being located at a mesial end of the reference line L and being concave in a distal direction, and/or the third target point M3 being located at a distal end of the reference line L and being concave in a mesial direction.

The provision of the third target point M3 can enhance the strength of the subsequently formed hollow bite pad and can reduce the difficulty of demolding during the forming process of the appliance with the bite pad.

Optionally, in combination with the first method for determining the reference line L in method four and the second method for determining the reference line L in method four, there are various methods for determining the reference line L, and for example, only fitting the plurality of first target points M1 to form the reference line L, or only fitting the plurality of second target points M2 to form the reference line L, or only fitting the third target point M3 to form the reference line L, or fitting both the plurality of first target points M1 and the plurality of second target points M2 to form the reference line L, or fitting both the plurality of first target points M1 and the third target point M3 to form the reference line L, or fitting both the plurality of second target points M2 and the third target point M3 to form the reference line L, or fitting the plurality of first target points M1, the plurality of second target points M2, and the third target point M3 to form the reference line L.

In the method for designing the digital bite pad 10 according to the embodiment of the present application, the design method includes:
Determining a spacing between two adjacent target points M in the mesiodistal direction;
when the spacing is greater than a preset value, inserting an additional target point between the two adjacent target points M.

Optionally, when the spacing between two target points M is too large, the fitting process may be hindered, and the additional target point may be inserted to assist the fitting.

In the method for designing the digital bite pad 10 according to the embodiment of the present application, the design method includes:
Adjusting the reference line L so that at least a part of the reference line L is smoothly transitioned.

Optionally, when there are no or few right-angle, acute-angle, or obtuse-angle transitions on the reference line L, the occlusal pressure received by the entire subsequently formed bite pad can be uniformly distributed, avoiding stress concentration points on the bite pad, thereby further enhancing the strength of the bite pad, and moreover, when the appliance with the bite pad is obtained by demolding, the rounded transitions can effectively reduce the difficulty of demolding.

In the method for designing the digital bite pad 10 according to the embodiment of the present application, the design method includes:
Extruding the reference line L along a normal direction of a reference plane; or extruding the reference line L in a direction having a first angle with the normal direction of the reference plane and in a converging manner, the first angle ranging from 0 to 10°, wherein the reference plane is formed by a plurality of points on the reference line L.

Optionally, since the reference line L is located on the target end surface A1, the plurality of points forming the reference line L are not substantially on the same plane. Therefore, the "reference plane formed by the plurality of points on the reference line L" is used here to represent the plane enclosed by the reference line L, and a reference plane passing through as many points on the reference line L as possible is taken as the standard.

The digital bite pad 10 generated by extruding the reference line L includes a top surface A4 away from the target end surface A1 and a side surface A5 connecting an edge of the top surface A4 and the reference line L.

When the reference line L is extruded along the normal direction of the reference plane, the side surface A5 is perpendicular to the reference plane, that is, at the time, it can be considered that the digital bite pad 10 is substantially arranged perpendicular to the target end surface A1, and a contour line of an orthographic projection of the digital bite pad 10 onto the target end surface A1 is the reference line L.

When the reference line L is extruded in the direction having the first angle with the normal direction of the reference plane and in the converging manner, at least a part of the side surface A5 forms an acute angle with the reference plane, that is, the digital bite pad 10 is arranged obliquely relative to the target end surface A1.

Optionally, the acute angle is formed between the side surface A5 and the reference plane, that is, the side surface A5 as a whole is arranged inclined toward the center of the digital bite pad 10, and in a direction from the reference line L to the top surface A4, a crosssectional dimension of the digital bite pad 10 shows a decreasing trend, that is, the side surface A5 extends toward the top surface A4 in a converging manner.

When the appliance with the bite pad is obtained by demolding, the side surface A5 arranged obliquely can effectively reduce the difficulty of demolding and can effectively improve the strength of the bite pad.

In the method for designing the digital bite pad 10 according to the embodiment of the present application, the design method includes:
Determining the digital bite pad 10 according to an opening height and the reference line L, the top surface A4 matching a shape of an occlusal surface of an opposing digital dentition 101.

Optionally, the target digital dentition 100 and the opposing digital dentition 101 having a specific occlusal relationship with the target digital dentition 100 may be obtained in advance, and the opening height is obtained according to the current occlusal relationship, and then a height of the digital bite pad 10 is determined according to the opening height, so that the subsequently formed bite pad can satisfy the occlusal relationship.

"The top surface A4 matches the shape of the occlusal surface of the opposing digital dentition 101" means that when the upper and lower jaws occlude, the top surface A4 and the occlusal surface of the opposing digital dentition 101 can fit together, which can improve the accuracy of the occlusal position and the stability of occlusion, thereby improving the jaw position correction effect, and at the time, the top surface A4 is an irregular shape, i.e., the top surface A4 at the time is a non-planar structure.

The top surface A4 may be formed, for example, by performing a Boolean operation based on the occlusal surface of the opposing digital dentition 101 to obtain the top surface.

Optionally, an initial top surface obtained according to the reference line L is subjected to a Boolean subtraction operation with the occlusal surface of the opposing digital dentition 101 to obtain the final top surface A4, and a concave-convex shape of the top surface A4 matches the occlusal surface of the opposing digital dentition 101.

Alternatively, the top surface A4 may be formed by generating the top surface A4 according to spacing information between the target end surface A1 and the occlusal surface of the opposing digital dentition 101.

Optionally, after obtaining the target digital dentition 100 and the opposing digital dentition 101 having the specific occlusal relationship with the target digital dentition 100, spacing information between an end surface enclosed by the reference line L and the occlusal surface of the opposing digital dentition 101 may be generated, the spacing information is, for example, a spacing between a point on the end surface enclosed by the reference line L and a corresponding point on the occlusal surface of the opposing digital dentition 101 in a height direction of the digital bite pad 10.

That is, the top surface A4 may be directly generated based on the end surface enclosed by the reference line L and the spacing information, and at the time, the concave-convex shape of the top surface A4 matches the occlusal surface of the opposing digital dentition 101.

It should be noted that, to ensure the accuracy of occlusion, a film thickness of the subsequently formed appliance needs to be considered, and therefore, the height of the digital bite pad 10 at the time needs to be increased by a distance of the film thickness; otherwise, occlusion may be interfered, however, the present application is not limited thereto, and the film thickness may also be ignored.

In the method for designing the digital bite pad 10 according to the embodiment of the present application, the design method includes:
Adjusting a preset bite pad based on the reference line L and an occlusal relationship between the target digital dentition 100 and the opposing digital dentition 101 to generate the digital bite pad 10.

Optionally, a preset bite pad may be pre-generated on the target digital dentition 100, and the preset bite pad may be, for example, a standardized bite pad, or a historical bite pad of the patient, or other possible preset bite pads, after the reference line L and the occlusal relationship are determined, the preset bite pad may be manually or automatically adjusted according to the reference line L and the occlusal relationship to generate the required digital bite pad 10.

Optionally, in some embodiments, the digital bite pad 10 may be obtained by extruding the reference line L according to the occlusal relationship; in other embodiments, the digital bite pad 10 may be obtained by adjusting the preset bite pad according to the occlusal relationship and the reference line L, but the present application is not limited thereto.

In the method for designing the digital bite pad 10 according to the embodiment of the present application, the design method includes:

Obtaining a plurality of digital bite pads 10 corresponding to a plurality of orthodontic steps, a height of at least a partial region of each digital bite pad 10 showing a decreasing trend as the orthodontic step progresses.

Optionally, the subsequently formed bite pad is used to maintain a vertical opening distance of the upper and lower jaws of the patient during treatment, and as the orthodontic step progresses, the vertical opening distance decreases, and the required height of the bite pad also decreases, that is, as the orthodontic step progresses, it is necessary to reduce the height of at least the partial region of the digital bite pad 10 to adapt to each orthodontic step.

It should be noted that it is not required that the height of the digital bite pad 10 be reduced every time an orthodontic step progresses, and for example, the same height of the digital bite pad 10 may be used for a plurality of consecutive orthodontic steps.

Optionally, a clinician may select a digital bite pad 10 of a specific height for a specific orthodontic step, or the specific height for the specific orthodontic step may be obtained based on big data or clinical experience.

With reference to FIG.s 40 and 41, an embodiment of the present application further provides a method for forming an appliance, including:
Obtaining a target digital dentition 100 with a digital bite pad 10 according to the method for designing the digital bite pad 10 as described above;
and generating an appliance 200 with a bite pad 20.

Optionally, a physical model may be first formed according to the target digital dentition 100 with the digital bite pad 10, and then the appliance 200 with the bite pad 20 may be generated by a thermoforming process.

Alternatively, the appliance 200 with the bite pad 20 may be generated directly by 3D printing according to data of the target digital dentition 100 with the digital bite pad 10.

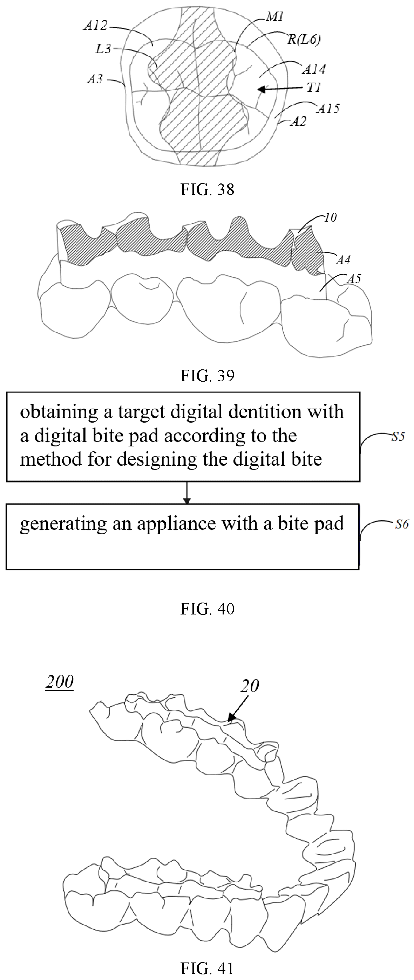

With reference to FIG. 41, an embodiment of the present application further provides an appliance 200, and the appliance 200 is obtained according to the method for forming the appliance as described above, and the appliance 200 is provided with the bite pad 20.

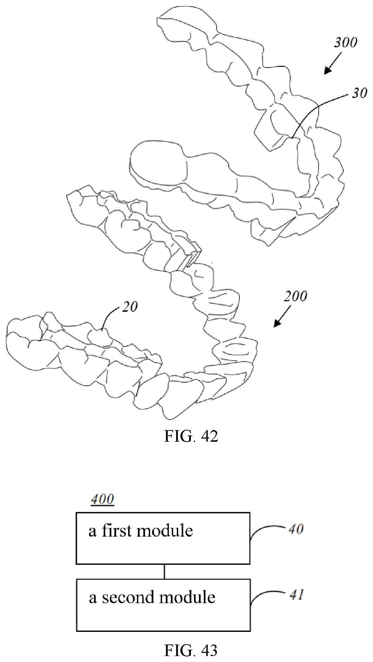

With reference to FIG. 42, an embodiment of the present application further provides an appliance assembly, including the appliance 200 with the bite pad 20 and an opposing appliance 300 with a guide portion 30.

The appliance 200 is arranged corresponding to one of upper teeth or lower teeth, and the opposing appliance 300 is arranged corresponding to the other.

When in an occlusal state, the guide portion 30 and the bite pad 20 cooperate with each other in a mesiodistal direction to achieve a horizontal movement of the upper teeth or the lower teeth.

In FIG. 42, the case where the appliance 200 is arranged corresponding to the lower teeth and the opposing appliance 300 is arranged corresponding to the upper teeth is taken as an example, and when in the occlusal state, a mesial end of the bite pad 20 abuts against a distal end of the guide portion 30 to achieve the horizontal movement of the lower teeth, i.e., retrusion of the lower teeth is achieved at the time.

In other embodiments, the bite pad 20 and the guide portion 30 may cooperate in other forms, and for example, a distal end of the bite pad 20 abuts against a mesial end of the guide portion 30 to achieve protrusion of the lower teeth.

It can be understood that in order to improve the stability of cooperation between the bite pad 20 and the guide portion 30, a friction structure or a concave-convex matching structure may be formed at the abutment therebetween.

With reference to FIG. 43, an embodiment of the present application further provides an apparatus 400 for designing a digital bite pad 10, including:
a first module 40 configured to obtain a target digital dentition 100;
a second module 41 configured to determine a reference line L for the digital bite pad 10 on a target end surface A1 according to an outer contour 11 of the target end surface A1 of the target digital dentition 100, the target end surface A1 being a tooth end surface of the target digital dentition 100 away from a gum, and the reference line L being used to generate the digital bite pad 10.

The apparatus 400 may also be configured based on the method for designing the digital bite pad 10 according to any of the above technical solutions. Specifically, related steps may be implemented in the same or different modules based on the interrelationship between the steps.

The above apparatus or its modules and units may be implemented by a computer chip or an entity, or by a product having a corresponding function. When describing the above apparatus, although it is divided into a plurality of modules for separate description, in other embodiments, the functions of the modules may be implemented in the same or multiple pieces of software or hardware.

An embodiment of the present application provides a storage medium, which may be specifically a computer-readable storage medium, and the storage medium may be provided in a computer and store an application program, and at the time, the storage medium may be any available medium that can be accessed by the computer, or may be a storage device such as a server, a data center, etc., that includes one or more available media integrated, and the available medium may be a magnetic medium such as a floppy disk, a hard disk, a magnetic tape, etc., or an optical medium such as a DVD (Digital Video Disc), or a semiconductor medium such as an SSD (Solid State Disk).

When the application program is executed, the steps of any technical solution of the method for designing the digital bite pad 10 described above are implemented.

An embodiment of the present application provides an electronic device, and the electronic device may be a computer, a mobile phone, a tablet computer, etc., and the present application does not limit the specific type of the electronic device.

The electronic device includes at least one processor, at least one memory, and a communication bus. The at least one processor and the at least one memory communicate with each other via the communication bus.

The communication bus may include any number of buses and bridge circuits. In some embodiments, in addition to connecting the processor and the memory, the communication bus may also be used to connect peripheral devices or other peripheral circuits.

The memory is configured to store an application program.

The processor is configured to implement the steps of any technical solution of the method for designing the digital bite pad 10 described above when executing the application program stored in the memory.

In summary, in the present embodiment, the reference line L is determined according to the outer contour 11, and then the digital bite pad 10 is generated according to the reference line L, that is, the digital bite pad 10 of the present embodiment is generated based on the outer contour 11 of the target end surface A1, for different patients with different outer contours 11, the present embodiment can determine different reference lines L to generate different digital bite pads 10, that is, the present embodiment can individually design the digital bite pad 10 according to the outer contour 11 of the target end surface A1 of each patient, which can greatly improve the patient experience.

The region of the reference line L corresponding to the interdental space N exhibits the inward shrinking trend, that is, the reference line L forms the necked segment at the interdental space N, which can enhance the strength of the subsequently formed hollow bite pad, preventing the hollow bite pad from being collapsed by biting.

When the subsequently formed appliance with the bite pad is worn on the patient's teeth, a higher proportion of teeth provide support beneath the bite pad, preventing the bite pad from deforming or collapsing due to lack of tooth support thereunder.

It should be understood that although the present specification is described in terms of embodiments, not every embodiment includes only a single independent technical solution, and this manner of description in the specification is merely for the sake of clarity. Those skilled in the art should take the specification as a whole, and the technical solutions in the various embodiments may also be appropriately combined to form other embodiments understandable to those skilled in the art.

The series of detailed descriptions listed above are merely specific descriptions of feasible embodiments of the present application, and are not intended to limit the protection scope of the present application, and any equivalent embodiment or change made without departing from the technical spirit of the present application should be included within the protection scope of the present application.

## Claims

1. A shell-shaped dental appliance, **characterized in that** the shell-shaped dental appliance comprises an appliance having a cavity for accommodating teeth and a support unit, wherein an occlusal surface of the appliance comprises a support surface corresponding to an occlusal surface of a certain posterior tooth, the support surface comprises a first support surface located in a middle portion and a second support surface surrounding the first support surface, a dividing line between the first support surface and the second support surface passes through a plurality of tips, the plurality of tips respectively correspond to a plurality of cusps of a posterior tooth, the support unit is located on the support surface, a junction region between the support unit and the support surface forms a first peripheral edge line, and at least a part of the first peripheral edge line is located within the first support surface.

2. The shell-shaped dental appliance according to claim 1, **characterized in that** the entire first peripheral edge line is located within the first support surface.

3. The shell-shaped dental appliance according to claim 2, **characterized in that** on a side close to a buccal surface or a lingual surface of the appliance, there is a gap between the first peripheral edge line and the dividing line.

4. The shell-shaped dental appliance according to claim 2, **characterized in that** the first peripheral edge line is a closed annular structure, and the first peripheral edge line is spaced apart from the dividing line.

5. The shell-shaped dental appliance according to claim 1, **characterized in that** the first peripheral edge line comprises a first part located on the first support surface and a second part located on the second support surface, the second part is connected to the first part, and the second part is located on a buccal side or a lingual side of the first support surface.

6. The shell-shaped dental appliance according to claim 5, **characterized in that** when the second part is located on the buccal side of the first support surface, the support unit is inclined toward a buccal surface of the appliance; when the second part is located on the lingual side of the first support surface, the support unit is inclined toward a lingual surface of the appliance.

7. The shell-shaped dental appliance according to claim 5, **characterized in that** the second part is located on the buccal side of the first support surface, and there is a gap between a region of the first part close to a lingual surface of the appliance and the dividing line, or, the second part is located on the lingual side of the first support surface, and there is a gap between a region of the first part close to a buccal surface of the appliance and the dividing line.

8. The shell-shaped dental appliance according to claim 5, **characterized in that** the second part is located on only one of the buccal side and the lingual side of the first support surface.

9. The shell-shaped dental appliance according to claim 8, **characterized in that** the first peripheral edge line is a closed annular structure, and there is a gap or coincidence between the first part and a mesial end and a distal end of the dividing line.

10. The shell-shaped dental appliance according to claim 8, **characterized in that** the first peripheral edge line is a closed annular structure, and the second part is also located on a mesial side and/or a distal side of the first support surface.

11. The shell-shaped dental appliance according to any one of claims 1-10, **characterized in that** the support unit is arranged vertically relative to an occlusal plane, or the support unit is arranged obliquely relative to the occlusal plane.

12. The shell-shaped dental appliance according to any one of claims 1-10, **characterized in that** the first peripheral edge line comprises a plurality of curved segments, and adjacent curved segments transition smoothly.

13. The shell-shaped dental appliance according to any one of claims 1-10, **characterized in that** the first peripheral edge line comprises at least one concave portion and at least one convex portion, and when the first peripheral edge line comprises a plurality of concave portions or a plurality of convex portions, the concave portions and the convex portions are alternately connected one by one.

14. The shell-shaped dental appliance according to claim 13, **characterized in that** an endpoint of the convex portion is adjacent to a corresponding tip.

15. The shell-shaped dental appliance according to any one of claims 1-10, **characterized in that** the shell-shaped dental appliance further comprises a connecting unit located on the occlusal surface of the appliance, the connecting unit connects two support units, a junction region between the connecting unit and the occlusal surface forms a second peripheral edge line, and the second peripheral edge line is connected to the first peripheral edge line.

16. The shell-shaped dental appliance according to claim 15, **characterized in that** the first peripheral edge line extends in a mesiodistal direction of the appliance and is connected to the second peripheral edge line, and the first peripheral edge line and the second peripheral edge line transition smoothly.

17. The shell-shaped dental appliance according to claim 15, **characterized in that** the second peripheral edge line comprises a lingual side line close to a lingual surface of the appliance and a buccal side line close to a buccal surface of the appliance, the lingual side line is concave toward the buccal side line, and the buccal side line is concave toward the lingual side line.

18. The shell-shaped dental appliance according to claim 15, **characterized in that** the second peripheral edge line comprises a first end connected to one of the first peripheral edge lines and a second end connected to another one of the first peripheral edge lines, in a direction from a buccal surface to a lingual surface of the appliance, the second peripheral edge line has a width, and the width first decreases and then increases when transitioning from the first end to the second end.

19. The shell-shaped dental appliance according to claim 15, **characterized in that** in a direction from a buccal surface to a lingual surface of the appliance, the first peripheral edge line has a first width, the second peripheral edge line has a second width, a ratio of a maximum value of the first width to a minimum value of the second width ranges from 0.15 to 0.5, and the minimum value of the second width is not less than 0.5 mm, or the minimum value of the second width ranges from 1 mm to 4 mm.

20. The shell-shaped dental appliance according to claim 15, **characterized in that** the shell-shaped dental appliance comprises a plurality of support units and a plurality of connecting units alternately connected one by one.

21. The shell-shaped dental appliance according to any one of claims 1-10, **characterized in that** the support unit is formed surrounding a cavity, and the cavity communicates with the cavity.

22. A shell-shaped dental appliance assembly, **characterized in that** the shell-shaped dental appliance assembly comprises the shell-shaped dental appliance according to any one of claims 1-21 and an opposing shell-shaped dental appliance, wherein one of the shell-shaped dental appliance and the opposing shell-shaped dental appliance is arranged corresponding to upper teeth, and the other is arranged corresponding to lower teeth.

23. The shell-shaped dental appliance assembly according to claim 22, **characterized in that** the opposing shell-shaped dental appliance comprises an opposing appliance and a guide portion located on an occlusal surface of the opposing appliance, and when in an occlusal state, the guide portion and the support unit cooperate with each other in a mesiodistal direction to achieve a horizontal movement of the upper teeth or the lower teeth.

24. The shell-shaped dental appliance assembly according to claim 22, **characterized in that** the opposing shell-shaped dental appliance comprises an opposing appliance having a cavity for accommodating teeth, and when upper and lower jaws are in an occlusal state, the support unit abuts against an occlusal surface of the opposing appliance, or the support unit abuts against an opposing support unit located on an occlusal surface of the opposing appliance.

25. A dental orthodontic appliance, **characterized in that** the dental orthodontic appliance comprises an appliance body and a bite pad located on an occlusal surface of the appliance body, wherein the occlusal surface comprises a first occlusal surface and a second occlusal surface that are connected, the first occlusal surface is arranged corresponding to a tooth occlusal surface, the second occlusal surface is arranged corresponding to an interdental space, and the bite pad located on the second occlusal surface exhibits an inward shrinking trend.

26. The dental orthodontic appliance according to claim 25, **characterized in that** a junction region between the bite pad and the occlusal surface forms an outer contour line, and in a direction from a buccal surface to a lingual surface of the appliance body, the outer contour line has a width, and the width shows a decreasing trend when transitioning from the first occlusal surface to the second occlusal surface.

27. The dental orthodontic appliance according to claim 26, **characterized in that** the outer contour line is formed by a plurality of curved segments, and adjacent curved segments transition smoothly.

28. The dental orthodontic appliance according to claim 26, **characterized in that** the outer contour line comprises a first outer contour line corresponding to the first occlusal surface and a second outer contour line corresponding to the second occlusal surface, a width of the first outer contour line is a first width, a width of the second outer contour line is a second width, and a ratio of a maximum value of the first width to a minimum value of the second width ranges from 0.15 to 0.5.

29. The dental orthodontic appliance according to claim 28, **characterized in that** the minimum value of the second width is not less than 0.5 mm, or the minimum value of the second width ranges from 1 mm to 4 mm, and a minimum value of the first width is greater than or equal to a maximum value of the second width.

30. The dental orthodontic appliance according to claim 26, **characterized in that** the outer contour line comprises a first outer contour line corresponding to the first occlusal surface, the first outer contour line corresponding to one tooth comprises a first peak segment, a first trough segment, and a second peak segment that are connected, or the first outer contour line corresponding to one tooth comprises a first trough segment, a first peak segment, and a second trough segment that are connected.

31. The dental orthodontic appliance according to claim 26, **characterized in that** the outer contour line comprises a second outer contour line corresponding to the second occlusal surface, the second outer contour line is a trough segment, and the second outer contour line comprises a first trough segment close to a lingual surface and a second trough segment close to a buccal surface.

32. The dental orthodontic appliance according to claim 25, **characterized in that** the bite pad is arranged corresponding to a plurality of posterior teeth, the first occlusal surface comprises a first region located in a middle portion and a second region surrounding the first region, a dividing line between the first region and the second region passes through a plurality of tips, the plurality of tips respectively correspond to a plurality of cusps of a posterior tooth, a junction region between the bite pad and the first occlusal surface forms a first outer contour line, the first outer contour line comprises an inner line located in the first region and an outer line located in the second region, and the outer line is connected to the inner line only in a mesiodistal direction of the appliance body.

33. The dental orthodontic appliance according to claim 32, **characterized in that** a junction region between the bite pad and the second occlusal surface forms a second outer contour line, the outer line connects the inner line and the second outer contour line, and the second outer contour line and the outer lines at both ends form a trough segment.

34. The dental orthodontic appliance according to claim 33, **characterized in that** the inner line comprises a peak segment, endpoints of two trough segments located on a same side and adjacent to each other form a reference line, and a maximum distance between the peak segment and the reference line on the same side is not less than 0.5 mm, or the maximum distance ranges from 1 mm to 3 mm.

35. The dental orthodontic appliance according to claim 32, **characterized in that** the inner line comprises a peak segment, and an endpoint of each peak segment is adjacent to a corresponding tip.

36. The dental orthodontic appliance according to claim 32, **characterized in that** the inner line comprises a first inner line close to a buccal surface of the appliance body and a second inner line close to a lingual surface of the appliance body, there is a first gap between the first inner line and the corresponding dividing line, and there is a second gap between the second inner line and the corresponding dividing line.

37. The dental orthodontic appliance according to claim 25, **characterized in that** the bite pad comprises an outer contour line formed at a junction region with the occlusal surface, an end surface away from the occlusal surface, and a side surface connecting a periphery of the end surface and the outer contour line, the end surface and the side surface are formed surrounding a cavity, the appliance body has a chamber for accommodating teeth, and the cavity communicates with the chamber.

38. The dental orthodontic appliance according to claim 37, **characterized in that** the side surface is formed by a plurality of curved surfaces, and adjacent curved surfaces transition smoothly.

39. The dental orthodontic appliance according to claim 37, **characterized in that** a plurality of points on the outer contour line enclose a reference plane, the side surface is perpendicular to the reference plane, or at least a part of the side surface forms an acute angle with the reference plane.

40. The dental orthodontic appliance according to claim 37, **characterized in that** a shape of the end surface matches a shape of an opposing occlusal surface.

41. The dental orthodontic appliance according to claim 37, **characterized in that** the dental orthodontic appliance further comprises a filling portion located within the cavity.

42. The dental orthodontic appliance according to claim 25, **characterized in that** the bite pad comprises a plurality of first occlusal surfaces and a plurality of second occlusal surfaces alternately connected one by one, and the bite pad at each second occlusal surface exhibits the inward shrinking trend.

43. A dental orthodontic appliance assembly, **characterized in that** the dental orthodontic appliance assembly comprises the dental orthodontic appliance according to any one of claims 25-42 and an opposing dental orthodontic appliance, wherein one of the dental orthodontic appliance and the opposing dental orthodontic appliance is arranged corresponding to upper teeth, and the other is arranged corresponding to lower teeth, the opposing dental orthodontic appliance comprises an opposing appliance body and a guide portion located on an occlusal surface of the opposing appliance body, and when in an occlusal state, the guide portion and the bite pad cooperate with each other in a mesiodistal direction to achieve a horizontal movement of the upper teeth or the lower teeth.

44. A method for designing a digital bite pad, **characterized in that** it comprises:
obtaining a target digital dentition; and
determining a reference line for the digital bite pad on a target end surface according to an outer contour of the target end surface of the target digital dentition, wherein the target end surface is a tooth end surface of the target digital dentition away from a gum, and the reference line is used to generate the digital bite pad.

45. The design method according to claim 44, **characterized in that** the reference line of the target end surface is determined according to at least one of: a shape of the outer contour of the target end surface and a tooth support capability of the target end surface.

46. The design method according to claim 45, **characterized in that** the design method comprises:
offsetting the outer contour toward a direction approaching a reference line to form two inner contour lines respectively close to a buccal surface and a lingual surface, wherein the reference line extends in a mesiodistal direction and passes through a center of the target end surface or passes through a cusp of the target end surface; and
connecting the two inner contour lines to form a closed reference line.

47. The design method according to claim 44, **characterized in that** the design method comprises:
forming a reference region located inside the outer contour on the target end surface, a periphery of the reference region forming a closed reference line.

48. The design method according to any one of claims 44-47, **characterized in that** the design method comprises:
obtaining a tooth support capability of the target end surface; and
determining the reference line based on the tooth support capability of at least a partial region of the target end surface.

49. The design method according to claim 48, **characterized in that** the design method comprises:
determining a spacing between the reference line and a center line according to the tooth support capability, wherein the center line is defined as a line passing through the center of the target end surface and extending in a mesiodistal direction, the spacing is a spacing in a buccolingual direction, and the spacing is proportional to the tooth support capability.

50. The design method according to claim 48, **characterized in that** the design method comprises:
according to the tooth support capability, selecting a plurality of target points on the target end surface, wherein a vertical distance from a target point to a center line is proportional to the tooth support capability, and the center line is defined as a line passing through the center of the target end surface and extending in a mesiodistal direction; and
fitting the plurality of target points to form the reference line.

51. The design method according to any one of claims 44-50, **characterized in that** a region of the reference line corresponding to an interdental space exhibits an inward shrinking trend.

52. The design method according to claim 44, **characterized in that** the design method comprises:
selecting a plurality of first target points in a posterior tooth region of the target end surface, the first target points being adjacent to posterior tooth cusps; and/or
selecting a plurality of second target points in the posterior tooth region of the target end surface, the second target points being located in at least one of an interdental space and a fossa region; and
fitting the plurality of first target points and/or the second target points to form the reference line.

53. The design method according to claim 52, **characterized in that** the first target point located on a same side deviates more from a center line than the second target point, and the center line is defined as a line passing through a center of the target end surface and extending in a mesiodistal direction.

54. The design method according to claim 52 or 53, **characterized in that** the reference line comprises two curves respectively close to a buccal surface and a lingual surface, the first target points are protruding points of one of the curves relative to the other curve, and the second target points are concave points of one of the curves relative to the other curve.

55. The design method according to any one of claims 44-54, **characterized in that** the design method comprises:
selecting at least one third target point in a posterior tooth region of the target end surface, the third target point being located in a fossa region, the third target point being used to form the reference line;
wherein the third target point is located at a mesial end of the reference line and is concave in a distal direction, and/or the third target point is located at a distal end of the reference line and is concave in a mesial direction.

56. The design method according to any one of claims 44-55, **characterized in that** the design method comprises:
adjusting a preset bite pad based on the reference line and an occlusal relationship between the target digital dentition and an opposing digital dentition to generate the digital bite pad.

57. A method for forming an appliance, **characterized in that** it comprises:
obtaining a target digital dentition with a digital bite pad according to the method for designing the digital bite pad of any one of claims 44-56; and
generating an appliance with a bite pad.

58. An appliance, **characterized in that** the appliance is obtained according to the method for forming the appliance of claim 57.

59. An appliance assembly, **characterized in that** it comprises the appliance with the bite pad according to claim 58 and an opposing appliance with a guide portion, wherein the appliance is arranged corresponding to one of upper teeth or lower teeth, and the opposing appliance is arranged corresponding to the other, and when in an occlusal state, the guide portion and the bite pad cooperate with each other in a mesiodistal direction to achieve a horizontal movement of the upper teeth or the lower teeth.

60. An apparatus for designing a digital bite pad, **characterized in that** it comprises:
a first module configured to obtain a target digital dentition; and
a second module configured to determine a reference line for the digital bite pad on a target end surface according to an outer contour of the target end surface of the target digital dentition, wherein the target end surface is a tooth end surface of the target digital dentition away from a gum, and the reference line is used to generate the digital bite pad.

61. An electronic device, **characterized in that** it comprises a processor, a memory, and a communication bus, wherein the processor and the memory communicate with each other via the communication bus;
the memory is configured to store an application program; and
the processor is configured to, when executing the application program stored in the memory, implement the steps of the method for designing the digital bite pad according to any one of claims 44-56.

62. A storage medium having an application program stored thereon, **characterized in that** when the application program is executed, the steps of the method for designing the digital bite pad according to any one of claims 44-56 are implemented.
